# EUROPEAN PATENT SPECIFICATION

(11) **EP 4 009 696 B1**
(45) Date of publication and mention of the grant of the patent: **11.09.2024**
(21) Application number: 20850016.5
(22) Date of filing: 27.07.2020
(51) Int. Cl.: H04L 69/04, H04W 28/06, H04W 28/14, H03M 7/30, H04L 67/5651, H04L 9/40

(54) **COMPRESSION DICTIONARY UPDATES IN WIRELESS COMMUNICATIONS**
AKTUALISIERUNGEN VON KOMPRESSIONSWÖRTERBÜCHERN IN DRAHTLOSEN KOMMUNIKATIONEN
MISES À JOUR DE DICTIONNAIRES DE COMPRESSION DANS DES COMMUNICATIONS SANS FIL

(30) Priority: 05.08.2019 CN 201910718222
(43) Date of publication of application: 08.06.2022
(73) Proprietor: Huawei Technologies Co., Ltd., Longgang District Shenzhen, Guangdong 518129 (CN)
(72) Inventor: XU, Xiaoying, Shenzhen, Guangdong 518129 (CN); HUANG, Qufang, Shenzhen, Guangdong 518129 (CN); FAN, Qiang, Shenzhen, Guangdong 518129 (CN); LOU, Chong, Shenzhen, Guangdong 518129 (CN)
(74) Representative: Maiwald GmbH
(86) International application number: PCT/CN2020/104839
(87) International publication number: WO 2021/023044

(56) References cited:
- WO-A1-2019/093960
- CN-A- 107 113 289
- CN-A- 107 645 538
- CN-A- 108 092 956
- CN-A- 109 842 653
- CN-A- 109 842 653
- CN-A- 109 842 905
- US-A1- 2005 185 677
- US-A1- 2011 202 673
- MEDIATEK INC: "Introduction of Operator Controlled Dictionary for UDC", 3GPP DRAFT; R2-1713767-36323_CRXXXX_(REL-15)_UDC_DICTIONARY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, USA; 20171127 - 20171201, 17 November 2017 (2017-11-17), Mobile Competence Centre ; 650, route des Lucioles ; F-06921 Sophia-Antipolis Cedex ; France, XP051372424

## Description

### TECHNICAL FIELD

This application relates to the field of communication technologies, and in particular, to a communication method and apparatus.

### BACKGROUND

A current communication system may support both an uplink data compression (uplink data compression, UDC) function and a downlink data compression function. The following uses the UDC function as an example for description.

For the UDC function, a terminal compresses uplink data packet and sends a compressed data packet to a network device, and the network device decompresses the received compressed data packet. Based on the UDC function, different parts between data packets are transmitted to reduce an amount of data that needs to be transmitted. In a protocol, content with a high repetition rate in a data packet is defined as a compression dictionary. When a UDC technology is used for data packet transmission, the terminal compresses the data packet by using the compression dictionary for sending. Each time the terminal sends the compressed data packet, the terminal updates the compression dictionary based on the original uncompressed data packet. Accordingly, the network device decompresses the received data packet by using a compression dictionary same as that of the terminal. Each time the network device receives the data packet, the network device updates the compression dictionary based on a decompressed data packet. Generally, the compression dictionary on the terminal side is stored in a compression buffer (buffer). Updating the compression dictionary may alternatively be understood as updating the compression buffer, and compressing the data packet by using the compression dictionary may alternatively be referred to as compressing the data packet by using the compression buffer. Similarly, the compression dictionary on the network device side is stored in a decompression buffer. Updating the compression dictionary may alternatively be understood as updating the decompression buffer, and decompressing the data packet by using the compression dictionary may alternatively be referred to as decompressing the data packet by using the decompression buffer.

Normally, the compression dictionary maintained by the terminal is the same as the compression dictionary maintained by the network device. However, in a process in which the network device receives the compressed data packet sent by the terminal, a receiving failure may occur. As a result, the network device cannot update the compression dictionary based on the decompressed data packet, while the terminal may have updated the compression dictionary based on an uncompressed data packet corresponding to a data packet that fails to be received. Consequently, the compression dictionary maintained by the terminal is inconsistent with the compression dictionary maintained by the network device. In this way, subsequent data packets may fail to be received, and a data packet receiving correct rate is reduced.
United States patent application US 2005/0185677 A1 discloses a telecommunications network that comprises a sending entity and a receiving entity that communication over a radio interface. The sending entity comprises a compressor which, in turn, comprises a sending entity compression dictionary and a dictionary update decision logic. The dictionary update decision logic makes a decision whether a compression factor justifies updating of a receiving entity decompression dictionary.
United States patent application US 2011/0202673 A1 discloses a network optimization device that receives a stream of data and identifies a selected compression dictionary from among a number of compression dictionaries based on the received stream of data.
Chinese patent application CN 107645538 A discloses a method and device for providing a dynamic compression dictionary.

### SUMMARY

Objects of the invention are defined in the appended independent claims. Preferred embodiments are covered by the appended dependent claims.

### BRIEF DESCRIPTION OF DRAWINGS

FIG. 1 is a schematic diagram of a communication system according to an embodiment of this application;
FIG. 2 is a schematic diagram of a network architecture according to an embodiment of this application;
FIG. 3 is a schematic diagram of another network architecture according to an embodiment of this application;
FIG. 4 is a schematic diagram of UDC according to an embodiment of this application;
FIG. 5 is an implementation flowchart of a communication method according to an embodiment of this application;
FIG. 6a is an implementation flowchart of a communication method according to an embodiment of this application;
FIG. 6b is an implementation flowchart of a communication method according to an embodiment of this application;
FIG. 7 is an implementation flowchart of another communication method according to an embodiment not being part of the present application;
FIG. 8 is an implementation flowchart of another communication method according to an embodiment not being part of the present application;
FIG. 9 is an implementation flowchart of still another communication method according to an embodiment not being part of the present application;
FIG. 10a is a schematic diagram of data unit transmission according to an embodiment not being part of the present application;
FIG. 10b is a schematic diagram of a UDC status report according to an embodiment not being part of the present application;
FIG. 11a is an implementation flowchart of still another communication method according to an embodiment not being part of the present application;
FIG. 11b is an implementation flowchart of still another communication method according to an embodiment not being part of the presentapplication;
FIG. 12 is an implementation flowchart of still another communication method according to an embodiment not being part of the presentapplication;
FIG. 13 is a schematic diagram of a structure of a communication apparatus according to an embodiment of this application;
FIG. 14 is a schematic diagram of a structure of another communication apparatus according to an embodiment of this application;
FIG. 15 is a schematic diagram of a structure of a terminal according to an embodiment of this application;
FIG. 16 is a schematic diagram of a structure of a network device according to an embodiment of this application; and
FIG. 17 is a schematic diagram of a structure of another network device according to an embodiment of this application.

### DESCRIPTION OF EMBODIMENTS

To make objectives, technical solutions, and advantages of embodiments of this application clearer, the following further describes the embodiments of this application in detail with reference to accompanying drawings.

Some terms in this application are first described, to help a person skilled in the art have a better understanding.
(1) A terminal is also referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device that has a wireless connection function. Currently, the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.
(2) A network device is a device in a wireless network. For example, the network device may be a radio access network (radio access network, RAN) node (or device) that enables a terminal to access the wireless network, and may also be referred to as a base station. Currently, examples of some RAN nodes are: a further evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home eNodeB (for example, a home evolved NodeB or a home NodeB, HNB), a baseband unit (baseband unit, BBU), a wireless fidelity (wireless fidelity, Wi-Fi) access point (access point, AP), and the like. In addition, in a network structure, the network device may include a centralized unit (centralized unit, CU) node, a distributed unit (distributed unit, DU) node, or a RAN device including a CU node and a DU node. The RAN device including a CU node and a DU node splits protocol layers of an eNB in a long term evolution (long term evolution, LTE) system. Functions of some protocol layers are centrally controlled by the CU, functions of some or all of remaining protocol layers are distributed in the DU, and the CU centrally controls the DU. For another example, the network device may be a core network (core network, CN) device that provides service support for the terminal. Common core network devices include an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, establishment of user sessions, and the like. The UPF entity may be a function entity on a user plane, and is mainly responsible for a connection to an external network.

Either the RAN device or the CN device may be used as the network device to perform the method performed by the network device in the embodiments of this application.

The compression node in the embodiments of this application may be the terminal or the network device. Similarly, the decompression node in the embodiments of this application may also be the terminal or the network device. This is not specifically limited. For example, in a possible implementation, the compression node is the terminal, and the decompression node is the network device. In another possible implementation, the compression node is the network device, and the decompression node is the terminal. In still another possible implementation, both the compression node and the decompression node are terminals. In still another possible implementation, both the compression node and the decompression node are network devices.

(3) A compression dictionary may be understood as content with a relatively high repetition rate between data packets. When the data packet is compressed by using the compression dictionary for transmission, a compressed data packet includes only a part that is different from that of the compression dictionary. The compression dictionary may include a protocol-defined standard dictionary. For example, the standard dictionary may be used for transmission of a session initiation protocol (session initiation protocol, SIP) data packet and transmission of a session description protocol (session description protocol, SDP) data packet.

(4) The terms "system" and "network" may be used interchangeably in the embodiments of this application. The term "a plurality of" means two or more, and another quantifier is similar to this. The term "and/or" describes an association relationship for describing associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one of (at least one of)..." means one or any combination of subsequent associated objects. For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in the embodiments of this application are used to distinguish between a plurality of objects, but are not intended to limit a sequence, a time sequence, priorities, or importance of the plurality of objects. For example, a first data packet and a second data packet are merely used to distinguish between different data packets, but do not indicate a difference in content, priorities, sending orders, importance degrees, or the like of the two data packets.

The following describes network architectures to which this application is applicable and solutions of this application.

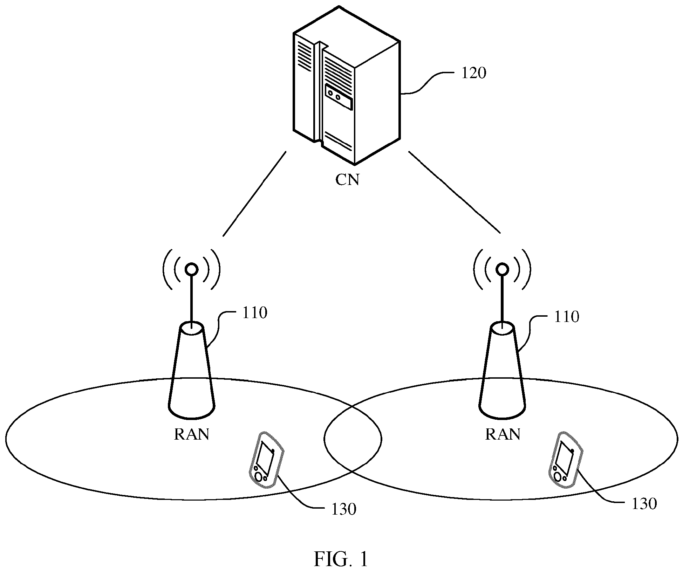

FIG. 1 is a schematic diagram of a communication system to which an embodiment of this application may be applied. As shown in FIG. 1, a terminal 130 may access a wireless network, to obtain a service from an external network (for example, the Internet) through the wireless network, or communicate with another device through the wireless network, for example, may communicate with another terminal. The wireless network includes a RAN 110 and a CN 120. The RAN 110 is used to connect the terminal 130 to the wireless network, and the CN 120 is used to manage the terminal and provide a gateway for communicating with the external network. It should be understood that a quantity of devices in the communication system shown in FIG. 1 is merely used as an example. This embodiment of this application is not limited thereto. In actual application, the communication system may further include more terminals 130 and more RANs 110, and may further include another device.

A type of the communication system shown in FIG. 1 is not limited in this application. For example, the communication system may be an LTE system, may be an NR system, or certainly may be a future communication system.

The CN 120 may include a plurality of CN devices. When the communication system shown in FIG. 1 is the NR system, the CN 120 may include an AMF entity, a UPF entity, an SMF entity, or the like. When the communication system shown in FIG. 1 is the LTE system, the CN 120 may include a mobility management entity (mobility management entity, MME), a serving gateway (serving gateway, S-GW), or the like.

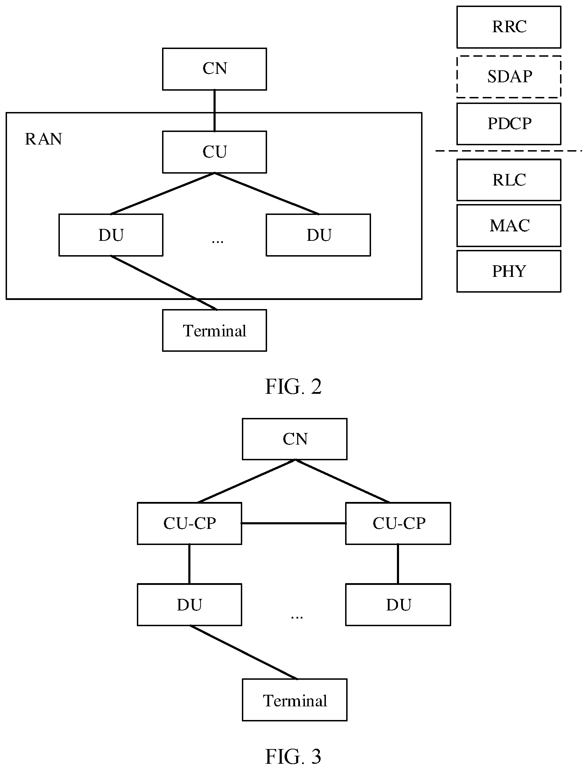

FIG. 2 is a schematic diagram of a network architecture according to an embodiment of this application. As shown in FIG. 2, the network architecture includes a CN device and a RAN device. The RAN device includes a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or some remote parts are integrated into the baseband apparatus. For example, in an LTE communication system, a RAN device (eNB) includes a baseband apparatus and a radio frequency apparatus. The radio frequency apparatus may be remotely disposed relative to the baseband apparatus. For example, a remote radio unit (remote radio unit, RRU) is remotely disposed relative to a BBU.

Communication between the RAN device and a terminal complies with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as the PDCP layer, the RLC layer, the MAC layer, and the physical layer. In an implementation, a service data adaptation protocol (service data adaptation protocol, SDAP) layer is further included above the PDCP layer.

The RAN device may implement the functions of the protocol layers such as the RRC layer, the PDCP layer, the RLC layer, and the MAC layer by using one node; or may implement the functions of these protocol layers by using a plurality of nodes. For example, in an evolved structure, the RAN device may include a centralized unit (centralized unit, CU) and a distributed unit (distributed unit, DU), and a plurality of DUs may be centrally controlled by one CU. As shown in FIG. 2, a CU and a DU may be divided based on a protocol layer of a wireless network. For example, functions of both the PDCP layer and a layer above the PDCP layer are set on the CU, and functions of protocol layers below the PDCP layer, such as the RLC layer and the MAC layer, are set on the DU.

Division based on the protocol layer is merely an example, and division may alternatively be performed based on another protocol layer, such as the RLC layer. Functions of both the RLC layer and a protocol layer above the RLC layer are set on the CU, and a function of a protocol layer below the RLC layer is set on the DU. Alternatively, division is performed based on a protocol layer. For example, some functions of the RLC layer and a function of a protocol layer above the RLC layer are set on the CU, and a remaining function of the RLC layer and a function of a protocol layer below the RLC layer are set on the DU. In addition, the division may alternatively be performed in another manner. For example, the division is performed based on a latency. A function whose processing time needs to satisfy a latency requirement is set on the DU, and a function whose processing time does not need to satisfy the latency requirement is set on the CU.

In addition, the radio frequency apparatus may be not placed in the DU but is placed remotely from the DU, or may be integrated into the DU, or a part is placed remotely from the DU and a remaining part is integrated into the DU. This is not limited herein.

Continue to refer to FIG. 3. Compared with the network architecture shown in FIG. 2, a control plane (CP) and a user plane (UP) of a CU may further be separated into different entities for implementation, and the different entities are a control plane CU entity (CU-CP entity) and a user plane CU entity (CU-UP entity).

In the foregoing network architecture, signaling generated by the CU may be sent to a terminal by using a DU, or signaling generated by a terminal may be sent to the CU by using a DU. The DU may transparently transmit the signaling to the terminal or the CU by directly encapsulating the signaling at a protocol layer without parsing the signaling. In the following embodiments, if transmission of such signaling between the DU and the terminal is included, sending or receiving the signaling by the DU includes this scenario. For example, signaling at an RRC layer or a PDCP layer is finally processed as signaling at a PHY layer and sent to the terminal, or is converted from received signaling at a PHY layer. In this architecture, it may also be considered that the signaling at the RRC layer or the PDCP layer is sent by the DU, or sent by the DU and the radio frequency apparatus.

In the foregoing embodiments, the CU may be classified as a network device on a RAN side. In addition, the CU may alternatively be classified as a network device on a CN side. This is not limited herein.

An apparatus in the following embodiments of this application may be located in a terminal or a network device based on functions implemented by the apparatus. When the foregoing CU-DU structure is used, a network device may be a CU node, a DU node, or a RAN device including a CU node and a DU node.

Currently, an UDC technology is introduced in acknowledged mode (acknowledged mode, AM) transmission in an LTE system, and the technology is implemented at the PDCP layer. The UDC technology is mainly for some data packets with a large amount of repeated content, for example, a data packet for transmitting a SIP in a voice over long term evolution (voice over long term evolution, VoLTE) service. Different parts between the data packets are transmitted, to reduce an amount of data that needs to be transmitted.

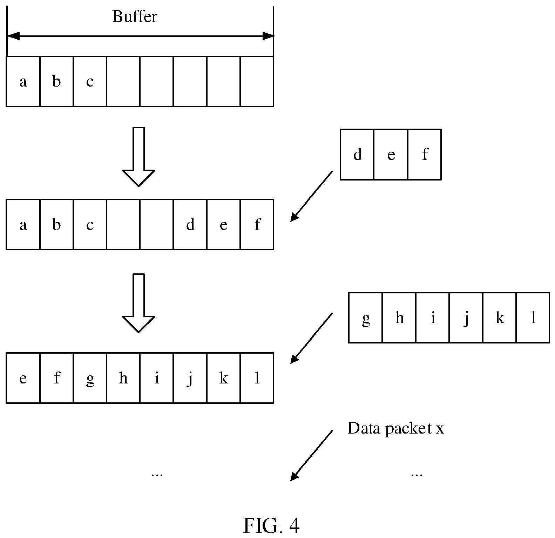

The UDC is an uplink compression technology. When data compression and transmission are performed by using the UDC, a terminal functioning as a compression node compresses a data packet, and a network device functioning as a decompression node decompresses the data packet. Both compression and decompression are performed by using a same buffer (buffer) jointly maintained by the compression node and the decompression node. In a process of performing data packet transmission by using the UDC technology, the compression node compresses the data packet by using the current buffer. After the compression succeeds, the compression node places, into the buffer from the tail of the buffer, uncompressed original information corresponding to a currently compressed data packet. For the 1^{st} data packet, the buffer does not include original information about a previous data packet during compression. In this case, the compression node may compress the sent 1^{st} data packet by using original content stored in the buffer. The original content stored in the buffer is referred to as a compression dictionary, an original compression dictionary, or the like in a related protocol. For example, refer to FIG. 4. It is assumed that a compression dictionary "abc" is stored in an original buffer. When the compression node needs to compress the 1^{st} data packet "def", the compression node may compress the data packet "def" by using the "abc", to obtain a compressed data packet 1. In this case, the compression node may place the "def' into the buffer from the tail of the buffer, which may be understood as updating the buffer based on the data packet "def". Then, when the compression node needs to compress a data packet "ghijkl", the compression node compresses the data packet "ghijkl" by using "abcdef' in the buffer, to obtain a compressed data packet 2. In this case, the compression node may place the data packet "ghijkl" into the buffer from the tail of the buffer, which may be understood as updating the buffer based on the data packet "ghijkl". By analogy, the compression node may compress a next data packet by using "efghijkl" in the buffer when sending the next data packet. That is, the compression node compresses a data packet by using all content in the current buffer each time. It may be understood that the compression node compresses the next data packet of the data packet by using an updated buffer of the current data packet. Because storage of the buffer is limited, "abed" is squeezed out of the buffer according to a first in first out (first in first out, FIFO) principle. In this case, if the compression node needs to compress other data packets, the compression is performed by using "efghijkl" included in the buffer. For the decompression node, after receiving the compressed data packet 1, the decompression node may perform decompression by using the compression dictionary "abc" in the buffer to obtain the data packet "def', and place the data packet "def' into the buffer from the tail of the buffer. After receiving the data packet 2, the decompression node may perform decompression by using the information "abcdef' in the buffer to obtain the data packet "ghijkl", and place the data packet "ghijkl" into the buffer from the tail of the buffer, so that the "abed" is squeezed out of the buffer. It can be learned that the decompression node can correctly perform decompression only when the buffer of the decompression node is always consistent with the buffer of the compression node.

However, in a process in which the network device receives the compressed data packet sent by the terminal, a data packet may fail to be received. Once the data packet fails to be received, the network device cannot update the buffer. In this case, the terminal may have updated the buffer based on an uncompressed data packet corresponding to the data packet that fails to be received. As a result, buffers maintained by the terminal and the network device are inconsistent, and the network device fails to decompress a subsequently received data packet. Consequently, a problem that a plurality of subsequently received data packets fail to be decompressed because one data packet is lost may occur, and air interface transmission reliability is reduced.

In view of the foregoing problem, embodiments of this application provide a plurality of communication methods, to ensure that the compression dictionaries or the buffers maintained by the terminal and the network device are consistent. It should be noted that the plurality of communication methods provided in this application are applicable to both an uplink communication scenario and a downlink communication scenario. This is not limited in this application. The following describes the plurality of communication methods provided in this application one by one.

In the first communication method provided in this application, a compression node always compresses a data packet by using an original compression dictionary or an original buffer (which is equivalent to the "abc" in FIG. 4 above), and the decompression node always decompresses the data packet by using the original compression dictionary or the original buffer. That is, each time the compression node sends a compressed data packet, the compression node does not update the original compression dictionary or the original buffer based on the uncompressed data packet; correspondingly, each time the decompression node receives the compressed data packet, the decompression node does not update the original compression dictionary or the original buffer based on a decompressed data packet. In this way, the original compression dictionaries or the original buffers of the compression node and the decompression node are consistent. Therefore, according to this method, even if some data packets fail to be received, the compression dictionaries or the buffers maintained by the compression node and the decompression node can still be consistent, so that a decoding correct rate of the decompression node can be ensured, and air interface transmission reliability can be ensured.

In the second communication method provided in this application, a compression node and a decompression node update a compression dictionary or a buffer based on an uncompressed data packet corresponding to a compressed data packet only when ensuring that the compressed data packet is correctly received by the decompression node. The compression node and the decompression node do not update the compression dictionary or the buffer based on a data packet that fails to be received. Therefore, according to this method, even if some data packets fail to be received, it can still be ensured that the compression node and the decompression node update the compression dictionary or the buffer based on the same data packet. In this way, updated compression dictionaries or buffers of the compression node and the decompression node can be consistent, a decoding correct rate of the decompression node can be ensured, and air interface transmission reliability can be ensured.

In the third communication method provided in this application, a compression node retransmits a data packet that fails to be received by a decompression node, so that the decompression node can update a compression dictionary or a buffer based on the retransmitted data packet. In this way, it can be ensured that the compression node and the decompression node update the compression dictionary or the buffer based on the same data packet, and the compression dictionaries or the buffers of the compression node and the decompression node are consistent. Alternatively, the compression node and the decompression node reset a data packet that fails to be received and that is stored in the buffer, to ensure that only a correctly received data packet is stored in the buffer, so that the compression dictionaries or the buffers of the compression node and the decompression node are consistent. Therefore, a decoding correct rate of the decompression node can be ensured, and air interface transmission reliability can be ensured.

Various communication methods provided in the embodiments of this application may be applied to an NR system, an LTE system, an LTE vehicle-to-everything (vehicle-to-everything, V2X) system, an NR vehicle-to-everything system, a next-generation wireless local area network system, or an integrated access backhaul (integrated access backhaul, IAB) system. This is not limited in this application.

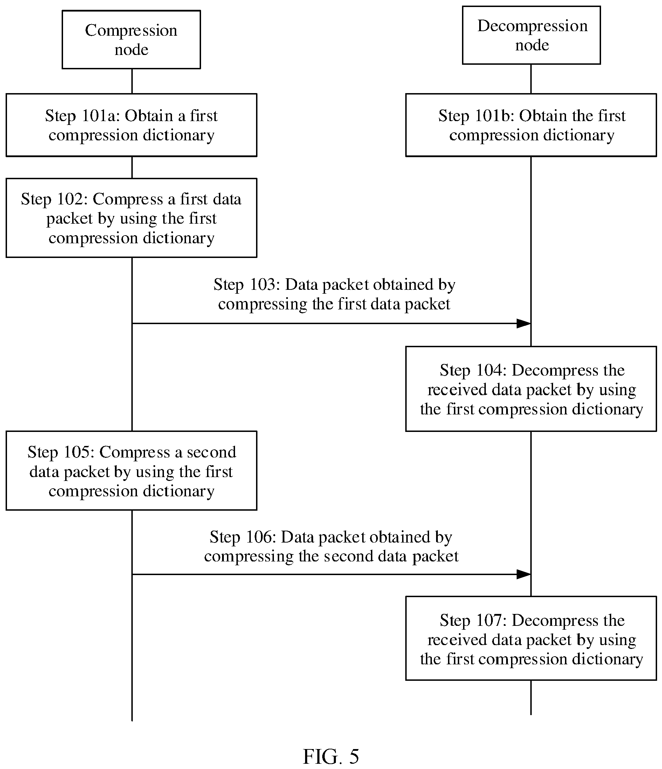

The following describes in detail the first communication method provided in this application. FIG. 5 is an implementation flowchart of a communication method according to an embodiment of this application. Refer to FIG. 5. The method includes the following steps.

Step 101a: A compression node obtains a first compression dictionary.

Step 101b: A decompression node obtains the first compression dictionary.

In this embodiment of this application, before the compression node and the decompression node transmit a data packet by using a compression technology, to ensure that the decompression node can correctly decompress a compressed data packet, the compression node and the decompression node need to maintain a same buffer, and need to store a same compression dictionary in the buffer. After the compression node and the decompression node enable a compression function and before the compression node and the decompression node transmit the data packet, the compression node and the decompression node maintain a same original buffer, and respective original buffers store a same original compression dictionary. To distinguish from a subsequent second compression dictionary, in this application, the original compression dictionary may be described as the first compression dictionary. Using FIG. 4 as an example, the first compression dictionary may be understood as the "abc" in FIG. 4. Meanings of the first compression dictionary related in the following descriptions are the same as meanings of the first compression dictionary herein. Details are not described again when the first compression dictionary appears again.

The first compression dictionary may be an uplink data compression dictionary or a downlink data compression dictionary. For example, when the compression node is a terminal and the decompression node is a network device, the first compression dictionary is the uplink data compression dictionary. When the compression node is a network device and the decompression node is a terminal, the first compression dictionary is the downlink data compression dictionary.

In this embodiment of this application, both the compression node and the decompression node may obtain the first compression dictionary by using the following method: first obtaining information about the first compression dictionary, and then determining the first compression dictionary based on the information about the first compression dictionary. The information about the first compression dictionary may include but is not limited to the first compression dictionary or an identifier of the first compression dictionary.

In this embodiment of this application, to ensure that the compression node and the decompression node obtain the same first compression dictionary, the compression node and the decompression node may obtain the information about the first compression dictionary in the following manners.

Manner 1: Both the compression node and the decompression node locally obtain preconfigured information about the first compression dictionary. It may be understood that the information about the first compression dictionary is predefined, and the same information about the first compression dictionary is predefined for the compression node and the decompression node, to ensure that the compression node and the decompression node obtain the same first compression dictionary.

Manner 2: The compression node receives the information about the first compression dictionary from a third-party node or locally obtains preconfigured information about the first compression dictionary, and sends the information to the decompression node, to ensure that the compression node and the decompression node can obtain the same first compression dictionary based on the information.

Manner 3: The decompression node receives the information about the first compression dictionary from a third-party node or locally obtains preconfigured information about the first compression dictionary, and sends the information to the compression node, to ensure that the compression node and the decompression node can obtain the same first compression dictionary based on the information. For example, the decompression node is the network device and the compression node is the terminal. The network device may send the information about the first compression dictionary to the terminal by using RRC signaling, a NAS message, PDCP control signaling, MAC signaling, or physical layer signaling.

The third-party node in the manner 2 and the manner 3 may include but is not limited to a server, a controller, a network management device, an access network device, a core network device, a time-sensitive networking (time-sensitive networking, TSN) device, or the like. For example, when the compression node is the terminal, the third-party node in the manner 2 may include but is not limited to a server, a controller, a TSN device, or the like. For another example, when the decompression node is a RAN device, the third-party node in the manner 3 may include but is not limited to a device such as a server, a network management device, or a core network device. For another example, when the decompression node is a CN device, the third-party node in the manner 3 may include but is not limited to a device such as a server, a network management device, or an access network device.

Step 102: The compression node compresses a first data packet by using a first compression dictionary, to obtain a data packet obtained by compressing the first data packet.

Step 103: The compression node sends, to the decompression node, the data packet obtained by compressing the first data packet.

Step 104: The decompression node decompresses, by using the first compression dictionary, the data packet obtained by compressing the first data packet.

Step 105: The compression node compresses a second data packet by using the first compression dictionary, to obtain a data packet obtained by compressing the second data packet. The second data packet and the first data packet may be different data packets.

Step 106: The compression node sends, to the decompression node, the data packet obtained by compressing the second data packet.

Step 107: The decompression node decompresses, by using the first compression dictionary, the data packet obtained by compressing the second data packet.

It may be understood that, in the embodiments or examples provided in this application, the compression node and/or the decompression node may perform some or all of the steps in the embodiments of this application. These steps or operations are merely examples. In this embodiment of this application, other operations or variations of various operations may be further performed. In addition, the steps may be performed in a sequence different from a sequence presented in the embodiments of this application, and not all operations in the embodiments of this application may be performed.

It should be noted that in step 102 to step 107, an example in which only two data packets are sent is used for description. When a plurality of data packets are sent in the compression manner of this application, neither the compression node nor the decompression node updates the first compression dictionary. The compression node always compresses the data packet by using the first compression dictionary, and the decompression node always decompresses the data packet by using the first compression dictionary. That is, each time the compression node sends a compressed data packet, the compression node does not update the first compression dictionary based on an uncompressed data packet; correspondingly, each time the decompression node receives the compressed data packet, the decompression node does not update the first compression dictionary based on a decompressed data packet. In this way, the compression dictionaries maintained by the compression node and the decompression node are always consistent.

The foregoing compression manner provided in this application may be predefined, or may be triggered by indication information. For example, the foregoing compression manner is predefined. The compression node and the decompression node may be preconfigured to be prohibited from updating the first compression dictionary, preconfigured not to update the compression dictionary based on the original data packet of the compressed data packet, preconfigured not to update the compression dictionary based on the first data packet, or preconfigured to compress the second data packet by using the first compression dictionary. For example, the foregoing compression manner is triggered by the indication information, the compression node is the terminal, and the decompression node is the network device. Before compressing the data packet, the terminal may further receive the indication information from the network device, where the indication information is used to indicate the compression node not to update the first compression dictionary, used to indicate that the terminal is prohibited from updating the first compression dictionary, used to indicate the terminal not to update the compression dictionary based on the original data packet of the compressed data packet, used to indicate the terminal not to update the compression dictionary based on the first data packet, or used to indicate the terminal to compress the second data packet by using the first compression dictionary. Optionally, when the network device sends the indication information to the terminal, the indication information may be carried in the RRC signaling, the NAS message, the PDCP control signaling, the MAC signaling, or the physical layer signaling.

In a possible implementation, for example, the compression node is the terminal and the decompression node is the network device. Before performing the compression manner, the network device may further send a radio bearer mode indication to the terminal, where the radio bearer mode indication is used to indicate a radio bearer mode for implementing the compression manner. For example, the radio bearer mode may include an unacknowledged mode (unacknowledged mode, UM), an acknowledged mode (acknowledged mode, AM), or a transparent mode (transparent mode, TM). Further, the network device may further send a bearer type indication to the terminal, where the bearer type indication is used to indicate a radio bearer type for implementing the compression manner. For example, the radio bearer type may include a data radio bearer (data radio bearer, DRB) or a signaling radio bearer (signaling radio bearer, SRB), where the SRB may include, for example, an SRB1, an SRB2, or an SRB3.

For example, if the first data packet is the 1^{st} data packet sent by the compression node in the foregoing compression manner, the second data packet is a data packet after the 1^{st} data packet, and the foregoing compression manner is triggered by the indication information, in step 105, the compression node compresses, based on the indication information, the second data packet by using the first compression dictionary.

For example, if both the first data packet and the second data packet are data packets after the 1^{st} data packet sent by the compression node in the foregoing compression manner, and the foregoing compression manner is triggered by the indication information, in step 102, the compression node compresses, based on the indication information, the first data packet by using the first compression dictionary, and in step 105, the compression node compresses, based on the indication information, the second data packet by using the first compression dictionary.

In the foregoing compression manner provided in this application, the compression node and the decompression node may always compress or decompress the data packet by using the initially obtained first compression dictionary. Subsequently, when the first compression dictionary is no longer suitable for to-be-compressed services of the compression node and the decompression node, the compression node and the decompression node may further exchange a new second compression dictionary by using signaling, and compress or decompress a subsequent data packet by using the new second compression dictionary. Two manners for exchanging information about the second compression dictionary are provided below.

Manner 1: The compression node sends the information about the second compression dictionary to the decompression node, where the information about the second compression dictionary is used to indicate the second compression dictionary used to subsequently compress a data packet. After exchanging the information, the compression node may compress a subsequent third data packet by using the second compression dictionary. Correspondingly, after receiving the information about the second compression dictionary, the decompression node may determine the second compression dictionary based on the information, and further may decompress, by using the second compression dictionary, the third data packet subsequently received from the compression node. Based on the manner 1, in a possible implementation, for example, the compression node is the terminal and the decompression node is the network device. After the terminal sends the information about the second compression dictionary to the network device, and the terminal determines that the network device correctly receives the information about the second compression dictionary, the terminal may update the first compression dictionary or update the buffer based on the reported second compression dictionary. For example, after receiving a response message from the network device, the terminal may determine that the network device correctly receives the information about the second compression dictionary. Alternatively, after sending the information about the second compression dictionary, if the terminal does not receive a negative acknowledgment within preset duration, the terminal determines that the network device correctly receives the information about the second compression dictionary.

Manner 2: The decompression node sends the information about the second compression dictionary to the compression node, where the information about the second compression dictionary is used to indicate the second compression dictionary used to subsequently compress a data packet. After exchanging the information, the compression node may compress a subsequent third data packet by using the second compression dictionary. Correspondingly, the decompression node may decompress, by using the second compression dictionary, the third data packet subsequently received from the compression node. Optionally, the network device may send the information about the second compression dictionary to the terminal by using a reconfiguration message or a handover command. Based on the manner 2, in a possible implementation, for example, the compression node is the terminal and the decompression node is the network device. After the network device sends the information about the second compression dictionary, and the network device determines that the terminal correctly receives the information about the second compression dictionary, the network device may update the first compression dictionary or update the buffer based on the second compression dictionary. For example, after receiving an acknowledgment response message from the terminal, the network device may determine that the terminal correctly receives the information about the second compression dictionary. Alternatively, after sending the information about the second compression dictionary, if the network device does not receive a negative acknowledgment within preset duration, the network device determines that the terminal correctly receives the information about the second compression dictionary. Optionally, after receiving an RLC ACK or a HARQ ACK of the acknowledgment response message, the terminal may update the first compression dictionary or update the buffer based on the second compression dictionary.

In this embodiment of this application, the compression node may further receive configuration information from the decompression node, where the configuration information is used to indicate to-be-compressed information, and the compression node compresses the to-be-compressed information based on the configuration information. According to the method, the compression node may perform compression on protocol-defined content, and may further perform content compression on some information specified by the configuration information. In this way, signaling sending overheads can be reduced. The to-be-compressed information may include but is not limited to at least one of the following: capability information, assistance information, a measurement log, and a measurement reporting message.

The following uses two complete examples to describe the first communication method provided in this application.

### Example 1:

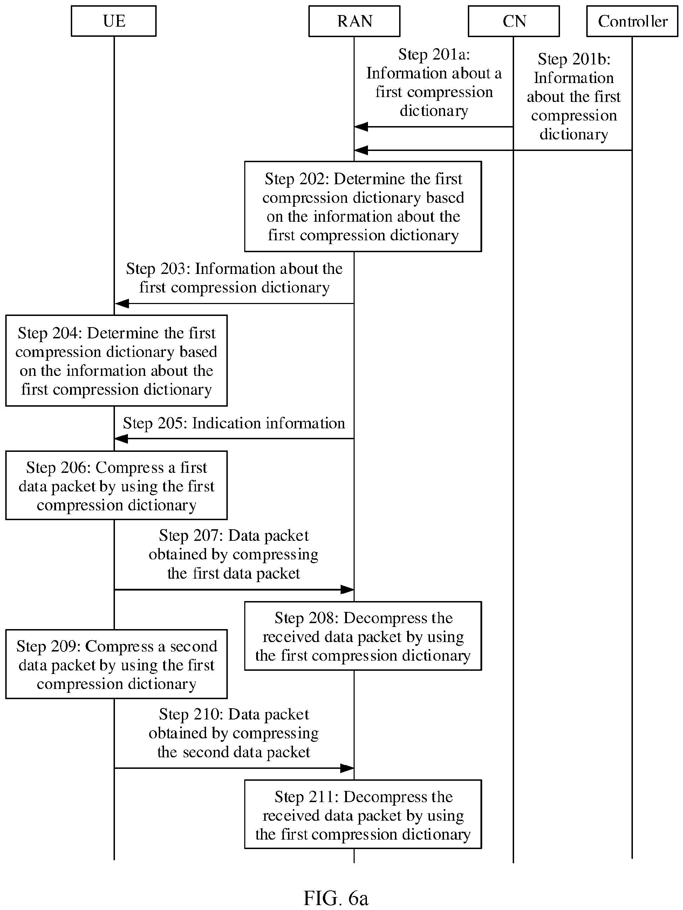

FIG. 6a is an implementation flowchart of a communication method according to an embodiment of this application. Refer to FIG. 6a. In this example, an example in which a compression node is UE, a decompression node is a RAN, a first compression dictionary is an uplink data compression dictionary, and a compression manner is triggered by indication information is used for description. The method includes the following steps.

Step 201a: The RAN obtains information about the first compression dictionary from a CN. The information about the first compression dictionary is, for example, an identifier of the first compression dictionary.

Step 201b: The RAN obtains the information about the first compression dictionary from a controller.

Either step 201a or step 201b is performed, and a purpose of performing step 201a or step 201b is to enable the RAN to obtain the first compression dictionary. It may be understood that in this example, only the two obtaining manners shown in FIG. 6a are used as examples. In practice, the RAN may alternatively obtain the information about the first compression dictionary in another manner. For details, refer to related descriptions in FIG. 5. Details are not described herein again.

Step 202: After obtaining the information about the first compression dictionary, the RAN may determine the first compression dictionary based on the information about the first compression dictionary. Further, the first compression dictionary may be inserted into a buffer from the tail of the buffer.

Step 203: After obtaining the information about the first compression dictionary, the RAN sends the information about the first compression dictionary to the UE. A sequence of performing step 202 and step 203 is not limited in this application.

Step 204: After receiving the information about the first compression dictionary, the UE may determine the first compression dictionary based on the information about the first compression dictionary. Further, the first compression dictionary may be inserted into the buffer from the tail of the buffer.

Step 205: The RAN sends the indication information to the UE, where the indication information is used to indicate that the compression node is prohibited from updating the first compression dictionary. For related explanations of the indication information, refer to the descriptions in FIG. 5. Optionally, after receiving the indication information from the RAN, the UE may further send an acknowledgment response message to the RAN, to indicate that the UE acknowledges the reception of the indication information.

In this example, the RAN may send the information about the first compression dictionary and the indication information to the UE by using same signaling or different signaling. In FIG. 6a, an example in which the sending is performed by using different signaling is used. When the RAN sends the information about the first compression dictionary and the indication information to the UE by using the same signaling, step 203 and step 205 are combined into one step for performing.

Step 206 to step 211 are the same as step 102 to step 107 in FIG. 5. For details, refer to related descriptions in FIG. 5. Details are not described herein again.

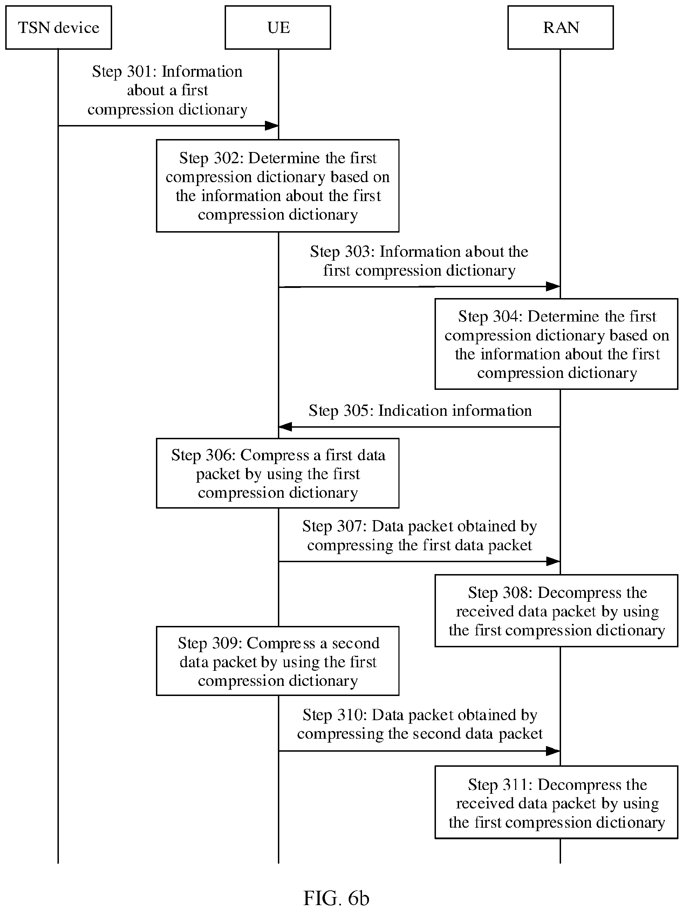

Example 2: FIG. 6b is an implementation flowchart of a communication method according to an embodiment of this application. Refer to FIG. 6b. In this example, an example in which a compression node is UE, a decompression node is a RAN, a first compression dictionary is an uplink data compression dictionary, and a compression manner is triggered by indication information is used for description. The method includes the following steps.

Step 301: UE obtains information about the first compression dictionary from a TSN device. The information about the first compression dictionary is, for example, an identifier of the first compression dictionary. In this example, only the manner for obtaining the information about the first compression dictionary shown in FIG. 6b is used as example. In practice, the UE may alternatively obtain the information about the first compression dictionary in another manner. For details, refer to related descriptions in FIG. 5. Details are not described herein again.

Step 302: After obtaining the information about the first compression dictionary, the UE may determine the first compression dictionary based on the information about the first compression dictionary. Further, the first compression dictionary may be inserted into a buffer from the tail of the buffer.

Step 303: After obtaining the information about the first compression dictionary, the UE sends the information about the first compression dictionary to the RAN. For example, the UE may report the information about the first compression dictionary to the RAN by using assistance information. A sequence of performing step 302 and step 303 is not limited in this application. In a possible implementation, the UE may first perform step 303. After receiving an acknowledgment response message from the RAN, the UE performs step 302, where the acknowledgment response message is used to acknowledge the reception of the information about the first compression dictionary.

Step 304: After receiving the information about the first compression dictionary, the RAN may determine the first compression dictionary based on the information about the first compression dictionary. Further, the first compression dictionary may be inserted into the buffer from the tail of the buffer.

Step 305 is the same as step 205 in FIG. 6a. For details, refer to related descriptions in FIG. 6a. Details are not described herein again. Step 306 to step 311 are the same as step 102 to step 107 in FIG. 5. For details, refer to related descriptions in FIG. 5. Details are not described herein again.

The following describes in detail the second communication method provided in this application.

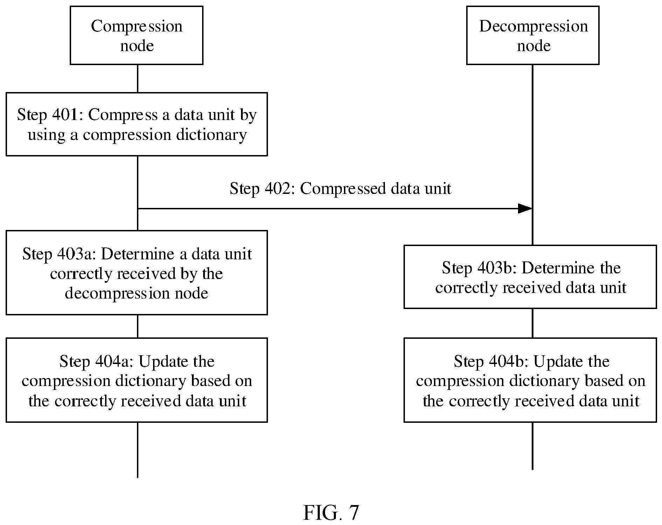

FIG. 7 is an implementation flowchart of another communication method according to an embodiment not being part of the presentapplication. Refer to FIG. 7. The method includes the following steps.

Step 401: A compression node compresses a data unit by using a compression dictionary. Before performing step 401, the compression node may obtain the compression dictionary. For an obtaining manner, refer to the foregoing related descriptions. In this application, the data unit may be understood as a data unit with a smaller granularity than that of a data packet, and one data packet may include a plurality of data units.

Step 402: The compression node sends a compressed data unit to a decompression node, and correspondingly, the decompression node receives the compressed data unit from the compression node.

Step 403a: The compression node determines a data unit correctly received by the decompression node.

Step 403b: The decompression node determines the correctly received data unit.

In this application, the correctly received data unit may include a correctly decompressed data unit. The compression node and the decompression node may determine the correctly received data unit by using any one of the following methods.

Method a: The compression node receives first feedback information from the decompression node, where the first feedback information is used to indicate the correctly received data unit, and the compression node determines the correctly received data unit based on the first feedback information. In the method a, the decompression node notifies the compression node of a specific correctly received data unit. For example, if the compression node sends five data units: a data unit 1, a data unit 2, a data unit 3, a data unit 4, and a data unit 5, and the decompression node correctly receives the first four data units, the decompression node may notify, by using the first feedback information, the compression node that the data unit 1, the data unit 2, the data unit 3, and the data unit 4 are correctly received. When the compression node determines, by using the method a, the data unit correctly received by the decompression node, correspondingly, the decompression node may determine that the correctly received data unit indicated by the first feedback information is the data unit correctly received by the decompression node. In a possible implementation based on the method a, the first feedback information may be used to indicate sequentially correctly received data units. For example, the first feedback information may be sequence number information corresponding to the sequentially correctly received data units. For example, the sequence number information may include but is not limited to: sequence numbers of the sequentially correctly received data units, sequence numbers of the first and last sequentially correctly received data units, the first sequentially correctly received data unit and a quantity of sequentially correctly received data units, and the last sequentially correctly received data unit and the quantity of sequentially correctly received data units. Alternatively, the first feedback information is used to indicate a data unit that fails to be received. The compression node determines, based on the first feedback information and sent data units, the data unit correctly received by the decompression node. For example, if the compression node sends three data units: a data unit 1, a data unit 2, and a data unit 3, and the decompression node correctly receives the data unit 1 and the data unit 3, the decompression node may send information about the data unit 2 that fails to be received to the compression node. For example, the decompression node sends an SN of the data unit 2, and the compression node may determine, based on the information about the data unit 2 that fails to be received and the three sent data units, that the decompression node correctly receives the data unit 1 and the data unit 3.

Method b: The compression node receives second feedback information from the decompression node, where the second feedback information is used to indicate correct receiving, and the compression node determines, based on the second feedback information, that the sent data unit is the correctly received data unit. In the method b, the decompression node only notifies the compression node that the data units are correctly received, and does not notify the compression node of a specific correctly received data unit. After receiving the second feedback information, the compression node considers that all the sent data units are correctly received. When the compression node determines, by using the method b, the data unit correctly received by the decompression node, correspondingly, the decompression node may determine, based on the second feedback information, that the received data unit is the correctly received data unit. Alternatively, the second feedback information is used to indicate a receiving failure. The compression node may determine, based on the second feedback information, that a data unit fails to be received by the decompression node in such a time period. In this case, the compression node may not update a compression buffer based on the sent data unit.

Method c: After sending the compressed data unit, if the compression node does not receive, within preset duration, receiving failure information fed back by the decompression node, the compression node determines that the sent data unit is the correctly received data unit. In this application, the receiving failure information may include verification failure information, packet loss information, or the like. When the compression node determines, by using the method c, the data unit correctly received by the decompression node, correspondingly, if the decompression node does not feed back the receiving failure information within the preset duration, the decompression node determines that the received data unit is the correctly received data unit. For example, the preset duration in the method c may be determined by using any one or a combination of the following: a timer, a quantity of preset data units, or a preset periodicity. Duration of the timer, the quantity of preset data units, and the preset periodicity may be predefined or agreed upon, or may be configured by the compression node or the decompression node. This is not limited in this application. For example, if the compression node does not receive, within the preset periodicity, the receiving failure information fed back by the decompression node, the compression node may determine that the sent data unit is the correctly received data unit. For another example, after sending K data units, if the compression node does not receive the receiving failure information sent by the decompression node, the compression node may determine that the K (where K is an integer greater than or equal to 2) data units or M (where M is a positive integer less than K) data units that have been sent are correctly received data units. For another example, after sending K data units to the decompression node, if the compression node does not receive, within the preset periodicity, the receiving failure information fed back by the decompression node, the compression node may determine that the K (where K is an integer greater than or equal to 2) data units or M (where M is a positive integer less than K) data units that have been sent are correctly received data units.

Based on the method c, in a possible implementation, the preset periodicity may be a survival (survival) periodicity obtained from a data receive end or the decompression node (an application server, a terminal application layer, or a core network device), and may also be referred to as a survival time (survival time). It should be noted that this implementation may be applied to a periodic service sending scenario. For the periodic service sending scenario, the data receive end has a deterministic transmission requirement for arrival time of a data packet. The survival periodicity is set by the data receive end to satisfy the deterministic transmission requirement. A protocol defines a maximum quantity of consecutive packets that fail to be received within the survival periodicity. The receiving failure may be packet loss or incorrect receiving. For example, if the data receive end considers that consecutive loss of less than or equal to n data packets can satisfy the deterministic transmission requirement, that is, a maximum quantity of consecutive lost packets allowed by the data receive end is n, the data receive end may set the survival periodicity to a period in which the n data packets are consecutively lost. It may be understood that in this case, survival periodicity=maximum quantity n of consecutive lost packets allowed by the data receive end×transmission periodicity of the data packet, where the transmission periodicity of the data packet herein may be understood as a periodicity of a periodic service.

In this application, the decompression node may send feedback information (for example, the first feedback information and/or the second feedback information) to the compression node by using RRC signaling, RLC layer signaling, a NAS message, PDCP control signaling, MAC signaling, or physical layer signaling. For example, if a PDCP entity of the decompression node does not receive the data packet within the preset duration, the PDCP entity may notify an entity at a physical layer to send the feedback information. For another example, if a MAC entity of the decompression node does not receive the data packet within the preset duration, the MAC entity may notify an entity at a physical layer to send the feedback information. In addition, the feedback information may be carried in a PDCP status report, a UDC status report, or a physical layer report. For example, the feedback information may be carried in a UDC status FE report included in the UDC status report. Optionally, the feedback information and an FE field in the UDC status FE report are carried in a same PDCP PDU or different PDCP PDUs.

In this embodiment of this application, when determining that at least one of the received data units fails to be received, the decompression node triggers generation of the first feedback information or the second feedback information. Alternatively, the decompression node triggers, based on a periodicity, generation of the first feedback information or the second feedback information. Alternatively, the decompression node triggers, based on a quantity of correctly received data units, generation of the first feedback information or the second feedback information. That the decompression node determines that the at least one of the data units fails to be received may include: No data unit or data packet arrives at an expected moment or on a preconfigured time-frequency resource. The expected moment may be determined by the decompression node based on a periodicity and an arrival start moment of the data packet that is of the compression node and that is sent by the compression node or the core network device. The periodicity may be the survival periodicity obtained from the application server, the terminal application layer, or the core network device.

Step 404a: The compression node updates the compression dictionary based on the correctly received data unit. For example, the compression node may determine a sequence number of the correctly received data unit, and may further search, based on the sequence number, for an uncompressed original data unit corresponding to the sequence number. Further, the compression node may update the compression dictionary based on the original data unit, or place the original data unit into a buffer that stores the compression dictionary from the tail of the buffer.

In this embodiment of this application, in addition to determining the correctly received data unit by using the foregoing three methods, the decompression node may further determine the correctly received data unit based on third feedback information sent by the compression node. For example, after updating the compression dictionary, the compression node may further send the third feedback information to the decompression node, where the third feedback information indicates a data unit placed into the buffer by the compression node. The decompression node may determine that the data unit placed into the buffer by the compression node is the correctly received data unit. The third feedback information may include but is not limited to a sequence number corresponding to the data unit placed into the buffer by the compression node, a sequence number corresponding to the first data unit placed into the buffer by the compression node and a sequence number corresponding to the last data unit, the sequence number corresponding to the first data unit placed into the buffer by the compression node and a quantity of data units placed into the buffer by the compression node, or the sequence number corresponding to the last data unit placed into the buffer by the compression node and the quantity of data units placed into the buffer by the compression node.

Step 404b: The decompression node updates the compression dictionary based on the correctly received data unit. For example, the correctly received data unit is the correctly decompressed data unit. The decompression node updates the compression dictionary based on the correctly decompressed data unit, or places the correctly decompressed data unit into the buffer that stores the compression dictionary from the tail of the buffer.

In a possible implementation, sequence numbers of the correctly received data units are consecutive, that is, the correctly received data units are consecutive correctly received data units. In this implementation, the compression node and the decompression node may store, according to a first rule, the uncompressed original data unit corresponding to the correctly received data unit into the buffer. The first rule may be an ascending order, a descending order, or another order of the sequence numbers of the correctly received data units. For example, after determining the correctly received data units, the compression node and the decompression node sequentially place the uncompressed original data units corresponding to the correctly received data units into the buffer from the tail of the buffer in ascending order of the sequence numbers.

The following uses one complete example to describe the second communication method provided in this application.

### Example 1:

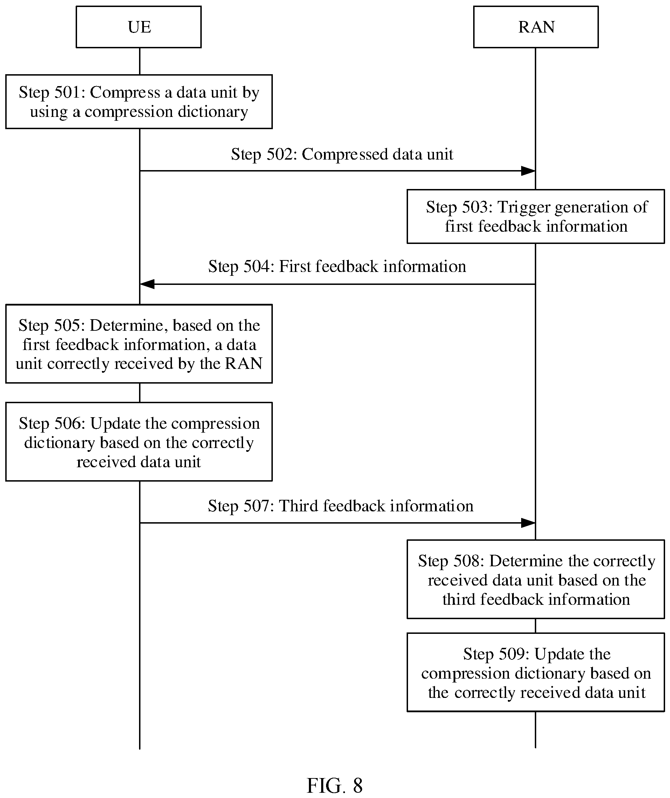

FIG. 8 is an implementation flowchart of another communication method according to an embodiment not being part of the presentapplication. Refer to FIG. 8. In this example, an example in which a compression node is UE, a decompression node is a RAN, and a first compression dictionary is an uplink data compression dictionary is used for description. The method includes the following steps.

Step 501: The UE compresses a data unit by using the compression dictionary.

Step 502: The UE sends a compressed data unit to the RAN.

Step 503: The RAN triggers generation of first feedback information. The first feedback information may be carried in a PDCP status report, a UDC status report, or a physical layer report. For details, refer to the foregoing descriptions. For meanings of the first feedback information, refer to the foregoing descriptions. In this example, an example in which the first feedback information is a sequence number N (where N is an integer greater than 1) of the last sequentially correctly received data unit is used for description. For a manner in which the RAN triggers the generation of the first feedback information, refer to related descriptions in FIG. 7. For example, the RAN may trigger, based on a preset timer at a periodicity, the generation of the first feedback information. Duration of the timer may be pre-agreed on by the UE and the RAN or configured by the RAN for the UE. Optionally, the periodicity may be a survival periodicity obtained from an application server, a UE application layer, or a core network device. For another example, the RAN may trigger, based on a quantity of correctly received data units, the generation of the first feedback information. The quantity may be pre-agreed on by the UE and the RAN or configured by the RAN for the UE.

Step 504: The RAN sends the first feedback information to the UE.

Step 505: The UE determines, based on the first feedback information, a data unit correctly received by the RAN. For example, the first feedback information is the sequence number N of the last sequentially correctly received data unit. The UE may determine that a data unit corresponding to a sequence number N of the first data unit that is not previously stored in the buffer is the data unit correctly received by the RAN.

Step 506: The UE updates the compression dictionary based on the correctly received data unit. For example, the UE sequentially places uncompressed original data units corresponding to the correctly received data units into the buffer from the tail of the buffer in ascending order of sequence numbers.

Step 507: The UE sends third feedback information to the RAN. For meanings of the third feedback information, refer to the foregoing descriptions. In this example, an example in which the third feedback information is a sequence number corresponding to a data unit placed into the buffer by the compression node is used for description.

Step 508: The RAN determines the correctly received data unit based on the third feedback information. For example, the RAN determines that a data unit corresponding to a sequence number indicated by the third feedback information is the correctly received data unit.

Step 509: The RAN updates the compression dictionary based on the correctly received data unit. For example, after determining the correctly received data units, the RAN sequentially place the uncompressed original data units corresponding to the correctly received data units into the buffer from the tail of the buffer in ascending order of the sequence numbers.

The following describes in detail the third communication method provided in this application.

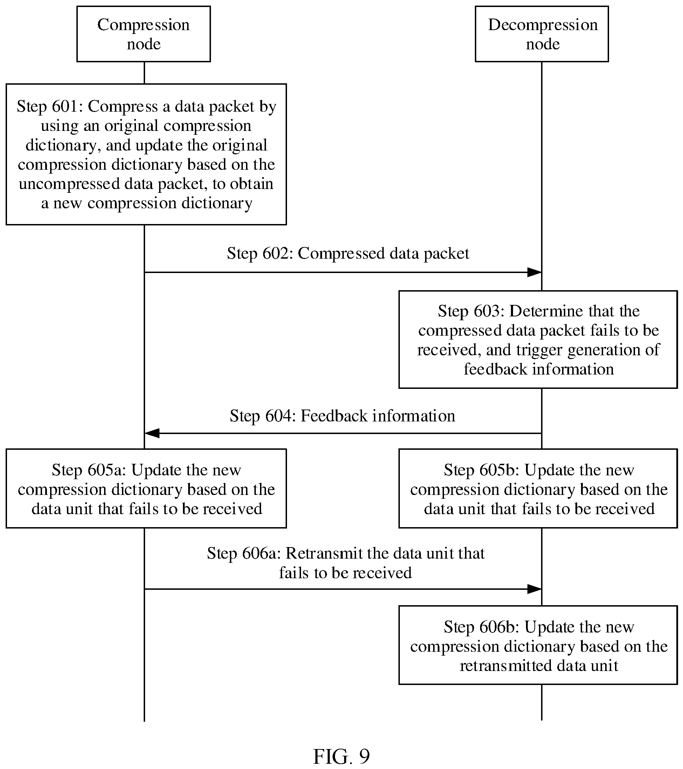

FIG. 9 is an implementation flowchart of still another communication method according to an embodiment not being part of the presentapplication. Refer to FIG. 9. The method includes the following steps.

Step 601: A compression node compresses a data packet by using an original compression dictionary, and updates the original compression dictionary based on the uncompressed data packet, to obtain a new compression dictionary. In this embodiment, before the compression node and a decompression node transmit the data packet by using a compression technology, to ensure that the decompression node can correctly decompress a compressed data packet, the compression node and the decompression node maintain a same buffer, and store the same original compression dictionary in the buffer. FIG. 4 is used as an example. The original compression dictionary may be understood as the "abc" in FIG. 4.

Step 602: The compression node sends the compressed data packet to the decompression node.

Step 603: The decompression node determines that the compressed data packet fails to be received, and triggers generation of feedback information, where the feedback information is used to indicate a data unit that fails to be received and that is in the data packet. The data unit that fails to be received may be a data unit that fails to be verified or a lost data unit. For example, if the decompression node determines that at least one data unit included in the compressed data packet fails to be received, the decompression node may determine that the data packet fails to be received, and further trigger the generation of the feedback information.

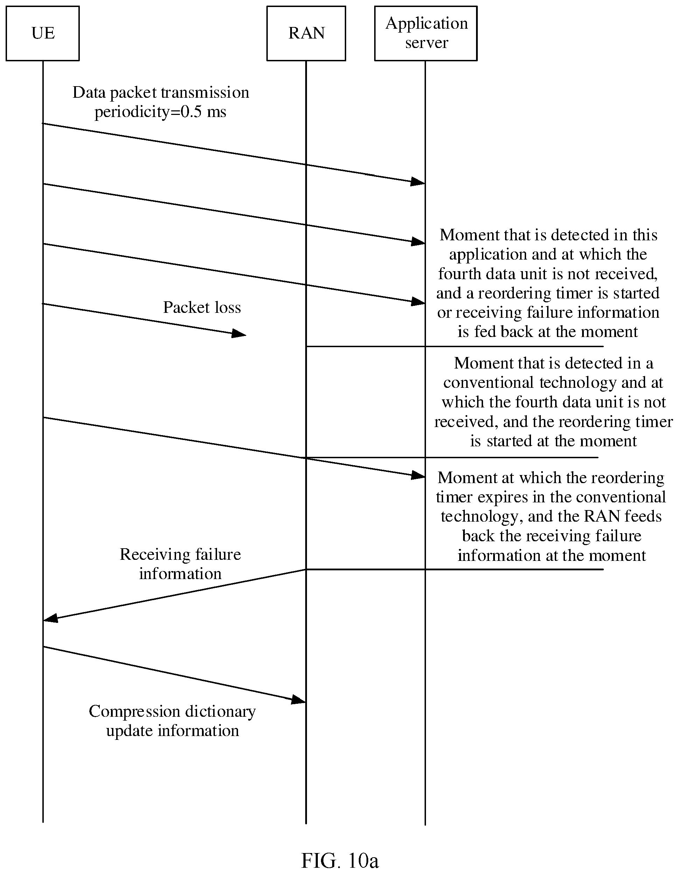

That the decompression node determines that at least one data unit included in the compressed data packet fails to be received may include: The at least one data unit does not arrive at an expected moment or on a preconfigured time-frequency resource. In a possible implementation, the expected moment may be determined by the decompression node based on a periodicity and an arrival start moment of the data packet that is of the compression node and that is sent by the compression node or a core network device. The periodicity may be a survival periodicity obtained from an application server, a terminal application layer, or the core network device, or a data packet transmission periodicity. The following uses an example for description. Refer to FIG. 10a. An example in which the compression node is UE, the decompression node is a RAN, and the UE periodically transmits a data packet or a data unit is used in FIG. 10a. An application server is a device that finally receives or uses data, and the UE sends the data unit at a periodicity of 0.5 ms. It can be learned from FIG. 10a that the first to the third data units are correctly received, and the fourth data unit is lost. According to a method in a conventional technology, only after the RAN receives the fifth data unit can the RAN determine, based on inconsecutive sequence numbers of the third data unit and the fifth data unit, that the fourth data unit is not received. In this case, a reordering timer is started. If the fourth data unit is still not received after the reordering timer expires, the RAN determines that the fourth data unit is lost, and is triggered to send data unit receiving failure information to the UE. Then, the UE updates an original compression dictionary based on the receiving failure information. It is clear that in the method in the conventional technology, a delay in feeding back the information by the RAN is relatively long, and further a delay in updating the original compression dictionary is relatively long. However, in the method in this application, the RAN may determine, based on a moment at which the first data unit is received, and a data unit sending periodicity of 0.5 ms or a survival periodicity obtained from the application server or a periodicity that is less than the survival periodicity and that is determined based on the survival periodicity, an expected moment of arrival of a subsequent data unit. If the RAN does not receive the corresponding data unit at the expected moment, the RAN may be triggered to send, to the UE, feedback information used to indicate a data unit that fails to be received and that is in the data packet. Alternatively, if the RAN does not receive the corresponding data unit at the expected moment, the reordering timer may be started. After the timer expires, the RAN is triggered to send, to the UE, feedback information used to indicate a data unit that fails to be received and that is in the data packet. According to both methods of this application, the RAN may quickly feed back information about the data unit that fails to be received to the UE. In this way, the UE can quickly detect UDC out-of-synchronization, and then synchronize the compression dictionary in a timely manner.

For example, the feedback information may be used to indicate sequence number information of the data unit that fails to be received. For example, the feedback information may indicate a sequence number x corresponding to the data unit that fails to be received or y least significant bits of the sequence number x, where y is a positive integer. For example, the feedback information may be used to indicate sequence number information of the data unit that fails to be verified based on verification information (for example, checksum).

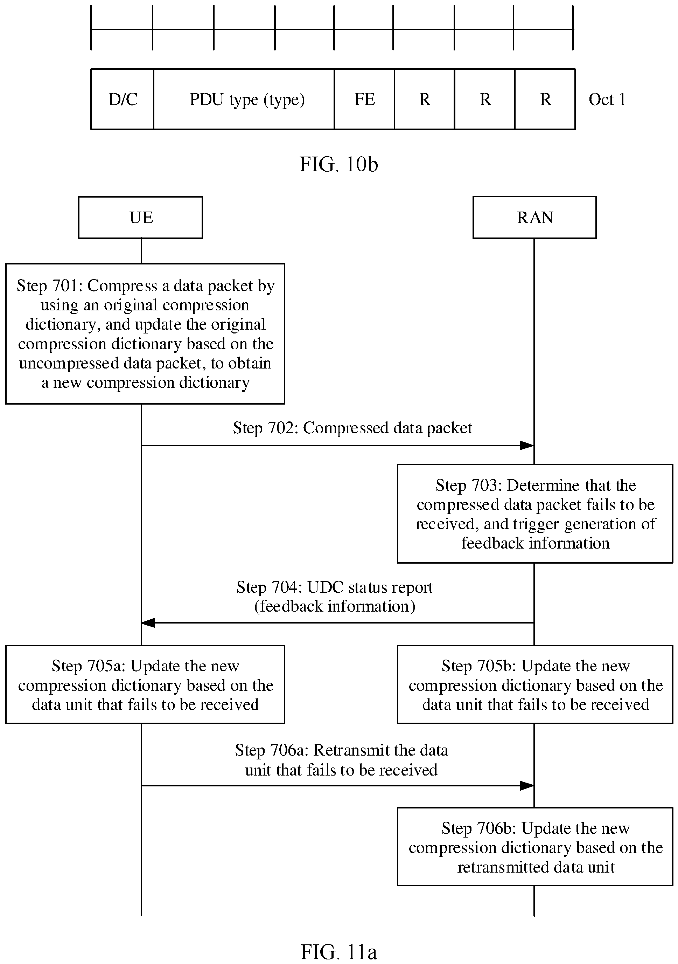

Step 604: The compression node receives the feedback information from the decompression node. Optionally, in this embodiment, the feedback information may be carried in a PDCP status report, a UDC status report, or a physical layer report. For example, the feedback information may be carried in a data packet that includes an FE field and that is in the UDC status report. FIG. 10b shows the data packet that includes the FE field and that is in the UDC status report. The feedback information may be carried in three R bits. When the feedback information is a sequence number of the data unit that fails to be received, the three R bits in FIG. 10b may be used to carry three least significant bits of the sequence number. Alternatively, the feedback information and the FE field are carried in different data packets.

Step 605a: The compression node updates the new compression dictionary based on the data unit that fails to be received.

Step 605b: The compression node updates the new compression dictionary based on the data unit that fails to be received.

For example, the compression node and the decompression node may update, by using the following method, a first compression dictionary based on the data unit that fails to be received: updating the new compression dictionary to the original compression dictionary, or resetting a part corresponding to the data unit that fails to be received in the new compression dictionary to 0.

Step 606a: The compression node retransmits the data unit that fails to be received to the decompression node.

Step 606b: The decompression node updates the new compression dictionary based on the retransmitted data unit. For example, if the decompression node does not store the data unit that fails to be received in the buffer before, the decompression node may decode the retransmitted data unit and store a decoded data unit in the buffer from the tail of the buffer. For another example, if the decompression node has stored the data unit that fails to be received in the buffer before, the decompression node may decode the retransmitted data unit and replace the data unit that fails to be received and that is stored in the buffer with a decoded data unit.

Optionally, the compression node may be configured to send the retransmitted data unit without being constrained by a discard timer, or may configure an infinite discard timer for the retransmitted data unit. The decompression node may be configured to receive the retransmitted data unit without being constrained by the reordering timer. Even if the reordering timer expires, the decompression node may still update the buffer based on the decompressed data unit of the retransmitted data unit. For example, the decompression node may configure a separate window/queue to maintain the received retransmitted data unit, so that the retransmitted data unit is not constrained by the reordering timer, and it is ensured that the decompression node definitely does not discard the retransmitted data unit. For example, if the function is configured for the compression node, when the compression node sends the retransmitted data unit, even if the discard timer configured for the retransmitted data unit has expired, the compression node sends the retransmitted data unit, to ensure that the retransmitted data unit can be sent to the decompression node. Correspondingly, if the function is configured for the decompression node, after the decompression node correctly receives the retransmitted data unit, even if the reordering timer configured for the data unit has expired, the decompression node may still update the buffer based on the decompressed data unit of the retransmitted data unit.

In this embodiment, step 605a and step 605b are performed, or step 606a and step 606b are performed.

The following uses two complete examples to describe the third communication method provided in this application.

### Example 1:

FIG. 11a is an implementation flowchart of still another communication method according to an embodiment not being part of the presentapplication. Refer to FIG. 11a. In this example, an example in which a compression node is UE, a decompression node is a RAN, and a first compression dictionary is an uplink data compression dictionary is used for description. The method includes the following steps.

Step 701 to step 703 are the same as step 601 to step 603 in FIG. 9. For details, refer to the foregoing descriptions.

Step 704: The RAN sends feedback information to the UE by using a UDC status report, and correspondingly, the UE receives the feedback information from the RAN. For a manner for carrying the feedback information in the UDC status report, refer to related descriptions in FIG. 9.

Step 705a and step 706b are the same as step 605a and step 606b in FIG. 9. For details, refer to the foregoing descriptions.

### Example 2:

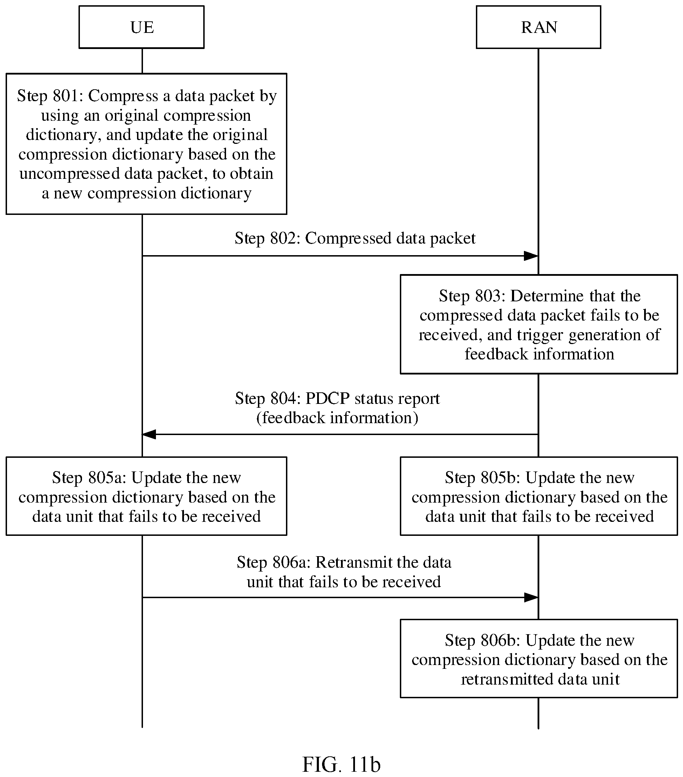

FIG. 11b is an implementation flowchart of still another communication method according to an embodiment not being part of the presentapplication. Refer to FIG. 11b. In this example, an example in which a compression node is UE, a decompression node is a RAN, and a first compression dictionary is an uplink data compression dictionary is used for description. The method includes the following steps.

Step 801 to step 803 are the same as step 601 to step 603 in FIG. 9. For details, refer to the foregoing descriptions.

Step 804: The RAN sends feedback information to the UE by using a PDCP status report, and correspondingly, the UE receives the feedback information from the RAN. For a manner for carrying the feedback information in the PDCP status report, refer to related descriptions in FIG. 9.

Step 805a and step 806b are the same as step 605a and step 606b in FIG. 9. For details, refer to the foregoing descriptions.

The foregoing embodiments of this application resolve a problem that the buffers of the compression node and the decompression node are inconsistent. In a process of transmitting the data packet by using a UDC technology, other problems still exist. For example, it is stipulated in an existing protocol that UDC configuration and UDC compression can be performed on only a PDCP SDU per RB by using the UDC technology, and the compression cannot be selectively performed a part of the data packets. This application provides a method in which compression can be performed on a part of data packets.

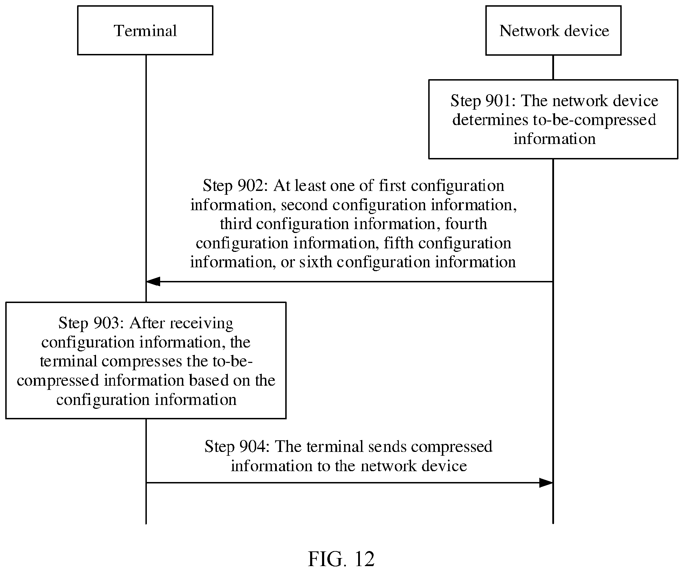

FIG. 12 is an implementation flowchart of still another communication method according to an embodiment not being part of the presentapplication. Refer to FIG. 12. The method includes the following steps.

Step 901: A network device determines to-be-compressed information. For example, the to-be-compressed information may include but is not limited to at least one of the following: capability information of a terminal, assistance information, a measurement log, and a measurement reporting message. It should be noted that an uplink compression and transmission scenario in this embodiment is used as an example for description. When the method is used in a downlink compression and transmission scenario, the to-be-compressed information may include some or all information in RRC reconfiguration signaling. In this embodiment of this application, an example in which the to-be-compressed information is the capability information of the terminal is mainly used for description. For example, the capability information of the terminal may include one or more radio access technology standard capabilities, for example, an NR standard capability, an LTE standard capability, a UMTS standard capability, or an MR-DC standard capability.

Step 902: The network device sends first configuration information to the terminal. Correspondingly, the terminal receives the first configuration information from the network device, where the first configuration information is used to indicate the to-be-compressed information.

In a possible implementation, the terminal may further receive second configuration information from the network device, where the second configuration information is used to indicate a compression position, and the compression position includes an RRC layer, a PDCP layer, or a NAS layer.

In a possible implementation, the terminal may further receive third configuration information from the network device, where the third configuration information is used to indicate the terminal to compress some or all content of the capability information of the terminal. For example, when the third configuration information indicates the terminal to compress the some content, the third configuration information may indicate the terminal to compress at least one of a PDCP layer parameter, an RLC parameter, a MAC parameter, a PHY parameter, an RF parameter, a measurement mobility parameter, a feature set parameter, or a feature set combination parameter.

In a possible implementation, the terminal may further receive fourth configuration information from the network device, where the fourth configuration information is used to indicate the terminal to compress a RAT capability, for example, compress at least one of the NR standard capability, the LTE standard capability, the MR-DC standard capability, an ED-DC standard capability, or the UMTS standard capability.

In a possible implementation, the terminal may further receive fifth configuration information from the network device, where the fifth configuration information is used to indicate the terminal to compress a UE radio capability or a CN capability.

In a possible implementation, the terminal may further receive sixth configuration information from the network device, where the sixth configuration information is used to indicate information about a compression dictionary, and the information may be, for example, a dictionary type, a dictionary identifier, or content in the dictionary. Optionally, the dictionary may be a compression dictionary for the UE radio capability or a compression dictionary for the CN capability.

Optionally, the first configuration information, the second configuration information, the third configuration information, the fourth configuration information, the fifth configuration information, or the sixth configuration information may be located in a same configuration message, or may be located in different configuration messages. For example, the configuration message may be NAS signaling, a broadcast message, RRC dedicated signaling, PDCP signaling, MAC signaling, physical layer signaling, or the like. This is not limited in this application.

Optionally, before the terminal receives the first configuration information from the network device, the terminal may send compression capability information to the network device, where the compression capability information is used to indicate that the terminal supports compression of the to-be-compressed information.

Step 903: After receiving configuration information (at least one of the first configuration information, the second configuration information, the third configuration information, the fourth configuration information, the fifth configuration information, or the sixth configuration information), the terminal compresses the to-be-compressed information based on the configuration information.

For example, it is assumed that the terminal receives the first configuration information, the second configuration information, the third configuration information, the fifth configuration information, and the sixth configuration information from the network device, where the first configuration information is used to indicate that the to-be-compressed information is the capability information of the terminal, the second configuration information is used to indicate the terminal to perform compression at the RRC layer, the third configuration information is used to indicate the terminal to compress the MAC parameter in the capability information of the terminal, the fifth configuration information is used to indicate the terminal to compress the UE radio capability, and the sixth configuration information is used to indicate the compression dictionary for the UE radio capability. After receiving the configuration information, the terminal configures a buffer, places the compression dictionary for the UE radio capability into the buffer from the tail of the buffer, and further compresses the MAC parameter in the UE radio capability at the RRC layer by using the buffer.

For another example, it is assumed that the terminal receives the first configuration information, the second configuration information, the third configuration information, the fifth configuration information, and the sixth configuration information from the network device, where the first configuration information is used to indicate that the to-be-compressed information is the capability information of the terminal, the second configuration information is used to indicate the terminal to perform compression at the NAS layer, the third configuration information is used to indicate the terminal to compress all content of the capability information of the terminal, the fifth configuration information is used to indicate the terminal to compress the CN capability, and the sixth configuration information is used to indicate the compression dictionary for the CN capability. After receiving the configuration information, the terminal configures a buffer, places the compression dictionary for the CN capability into the buffer from the tail of the buffer, and further compresses the CN capability of the UE at the NAS layer by using the buffer.

For another example, it is assumed that the terminal receives the first configuration information, the second configuration information, the third configuration information, the fifth configuration information, and the sixth configuration information from the network device, where the first configuration information is used to indicate that the to-be-compressed information is the capability information of the terminal, the second configuration information is used to indicate the terminal to perform compression at the PDCP layer, the third configuration information is used to indicate the terminal to compress all content of the capability information of the terminal, the fifth configuration information is used to indicate the terminal to compress the UE radio capability, and the sixth configuration information is used to indicate the compression dictionary for the UE radio capability. After receiving the configuration information, the terminal configures a buffer, places the compression dictionary for the UE radio capability into the buffer from the tail of the buffer, and further compresses the UE radio capability at the PDCP layer by using the buffer.

It should be noted that if the terminal performs information compression at the PDCP layer, a PDCP entity of the terminal may receive a content compression indication from the RRC entity of the terminal, where the content compression indication is used to indicate the PDCP entity to compress the to-be-compressed information. The PDCP entity may determine, according to the content compression indication, to compress the to-be-compressed information.

Step 904: After compressing the to-be-compressed information based on the configuration information, the terminal sends compressed information to the network device.

The method provided in FIG. 12 in this application may be implemented in combination with any method provided above, or may be independently implemented. This is not limited in this application.

The foregoing mainly describes the solutions provided in the embodiments of this application from the perspective of interaction between the compression node and the decompression node. It may be understood that, to implement the foregoing functions, the compression node and the decompression node include corresponding hardware structures and/or software modules for performing the functions. With reference to units and algorithm steps of the examples described in the embodiments disclosed in this application, the embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, function unit division may be performed on the compression node and the decompression node based on the foregoing method examples. For example, each function unit may be obtained through division based on a corresponding function, or two or more functions may be integrated into one processing unit. The integrated unit may be implemented in a form of hardware, or may be implemented in a form of a software function unit.

Based on a same inventive concept, the embodiments of this application further provide an apparatus configured to implement any one of the foregoing methods. For example, an apparatus is provided, and includes units (or means) configured to implement the steps performed by the compression node in any one of the foregoing methods. For another example, another apparatus is further provided, and includes units (or means) configured to implement the steps performed by the decompression node in any one of the foregoing methods.

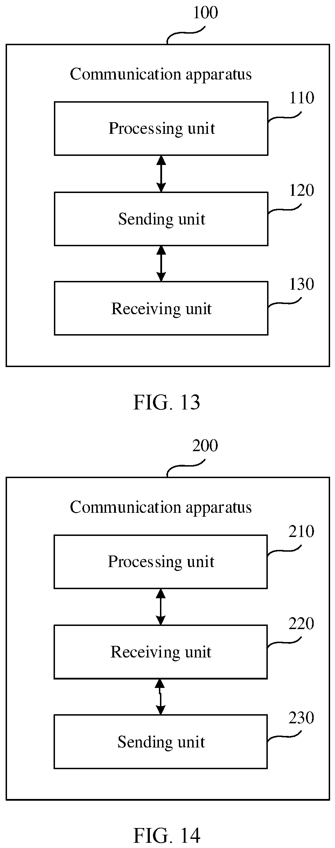

In a possible implementation, an embodiment of this application provides a communication apparatus 100. The communication apparatus 100 may be used in a compression node. FIG. 13 is a schematic diagram of a structure of the communication apparatus 100 according to an embodiment of this application. Refer to FIG. 13. The communication apparatus 100 includes a processing unit 110 and a sending unit 120. In an implementation, the communication apparatus 100 may further include a receiving unit 130.

When the communication apparatus 100 is configured to perform the method shown in FIG. 5, the processing unit 110 may be configured to: obtain a first compression dictionary, and compress a first data packet by using the first compression dictionary, and the sending unit 120 may be configured to send, to a decompression node, a data packet obtained by compressing the first data packet; the processing unit 110 may be further configured to compress a second data packet by using the first compression dictionary, and the sending unit 120 may be further configured to send, to the decompression node, a data packet obtained by compressing the second data packet.

When the communication apparatus 100 is configured to perform the method shown in FIG. 7, the processing unit 110 may be configured to compress a data unit by using a compression dictionary, and the sending unit 120 may be configured to send a compressed data unit to a decompression node; the processing unit 110 may be further configured to: determine a data unit correctly received by the decompression node, and update the compression dictionary based on the correctly received data unit.

When the communication apparatus 100 is configured to perform the method shown in FIG. 9, the processing unit 110 may be configured to: compress a data packet by using an original compression dictionary, and update the original compression dictionary based on the uncompressed data packet, to obtain a first compression dictionary; the sending unit 120 may be configured to send a compressed data packet to a decompression node; the receiving unit 130 may be configured to receive feedback information from the decompression node, where the feedback information is used to indicate a data unit that fails to be received and that is in the data packet; the processing unit 110 may be further configured to update the first compression dictionary or retransmit the data unit based on the data unit that fails to be received.

In another possible implementation, an embodiment of this application further provides a communication apparatus 200. The communication apparatus 200 may be used in a decompression node. FIG. 14 is a schematic diagram of a structure of the communication apparatus 200 according to an embodiment of this application. Refer to FIG. 14. The communication apparatus 200 includes a processing unit 210 and a receiving unit 220. In an implementation, the communication apparatus 200 may further include a sending unit 230.

When the communication apparatus 100 is configured to perform the method shown in FIG. 5, the processing unit 110 may be configured to obtain a first compression dictionary; the receiving unit 220 may be configured to receive a first data packet from a compression node, where the first data packet is a compressed data packet, and the processing unit 110 may be further configured to decompress the first data packet by using the first compression dictionary; the receiving unit 220 may be further configured to receive a second data packet from the compression node, where the second data packet is a compressed data packet, and the processing unit 110 may be further configured to decompress the second data packet by using the first compression dictionary.

When the communication apparatus 100 is configured to perform the method shown in FIG. 7, the receiving unit 220 may be configured to receive, from a compression node, a data unit that is compressed by using a compression dictionary, and the processing unit 110 may be configured to: determine a correctly received data unit, and update the compression dictionary based on the correctly received data unit.

When the communication apparatus 100 is configured to perform the method shown in FIG. 9, the receiving unit 220 may be configured to receive a data packet from a compression node, where the data packet is a data packet compressed by using an original compression dictionary; the sending unit 230 may be configured to send feedback information to the compression node, where the feedback information is used to indicate a data unit that fails to be received and that is in the data packet; the receiving unit 220 may be further configured to receive a retransmitted data unit of the data unit from the compression node, or update the compression dictionary based on the data unit that fails to be received.

When the communication apparatus 100 is used in the compression node, the communication apparatus 200 is used in the decompression node, and the method shown in FIG. 5 is performed, the following operations may be further performed.

In a possible implementation, the receiving unit 130 may be further configured to receive indication information from the decompression node, where the indication information is used to indicate not to update the first compression dictionary.

In a possible implementation, the processing unit 110 and the processing unit 210 may be further configured to: obtain information about the first compression dictionary, and determine the first compression dictionary based on the information about the first compression dictionary.

Based on the foregoing possible implementations, the information about the first compression dictionary may be obtained by using the following methods.

Method 1: The processing unit 110 may be configured to locally obtain preconfigured information about the first compression dictionary, or the receiving unit 130 is configured to receive the information about the first compression dictionary from a third-party node. Further, the sending unit 120 may further send the information about the first compression dictionary to the decompression node.

Method 2: The receiving unit 130 receives the information about the first compression dictionary from the decompression node.

Based on the foregoing possible implementations, the information about the first compression dictionary may be obtained by using the following methods.

Method 1: The processing unit 210 locally obtains preconfigured information about the first compression dictionary, or the receiving unit 220 receives the information about the first compression dictionary from a third-party node. Further, the sending unit 230 may further send the information about the first compression dictionary to the compression node.

Method 2: The receiving unit 220 receives the information about the first compression dictionary from the compression node.

In a possible implementation, the sending unit 120 sends information about a second compression dictionary to the decompression node, where the information about the second compression dictionary is used to indicate the second compression dictionary used to subsequently compress a data packet, and the processing unit 110 may compress a subsequent third data packet by using the second compression dictionary. Correspondingly, after the receiving unit 220 receives the information about the second compression dictionary, the processing unit 210 may decompress the subsequently received third data packet by using the second compression dictionary.

In a possible implementation, the receiving unit 130 receives information about a second compression dictionary from the decompression node, where the information about the second compression dictionary is used to indicate the second compression dictionary used to subsequently compress a data packet, and the processing unit 110 may compress a subsequent third data packet by using the second compression dictionary. Correspondingly, the processing unit 210 may decompress the subsequently received third data packet by using the second compression dictionary.

In a possible implementation, the receiving unit 130 may receive configuration information from the decompression node, where the configuration information is used to indicate to-be-compressed information, and the processing unit 110 compresses the to-be-compressed information based on the configuration information.

In a possible implementation, the to-be-compressed information may include but is not limited to at least one of the following: capability information, assistance information, a measurement log, and a measurement reporting message.

When the communication apparatus 100 is used in the compression node, the communication apparatus 200 is used in the decompression node, and the method shown in FIG. 7 is performed, the following operations may be further performed.

In a possible implementation, the communication apparatus 100 may determine, by using any one of the following methods, the data unit correctly received by the decompression node.

Method a: The receiving unit 130 receives first feedback information from the decompression node, where the first feedback information is used to indicate the correctly received data unit, and the processing unit 110 determines the correctly received data unit based on the first feedback information.

Method b: The receiving unit 130 receives second feedback information from the decompression node, where the second feedback information is used to indicate correct receiving, and the processing unit 110 determines, based on the second feedback information, that the sent data unit is the correctly received data unit.

Method c: After the sending unit 120 sends the compressed data unit, if the receiving unit 130 does not receive, within preset duration, receiving failure information fed back by the decompression node, the processing unit 110 determines that the sent data unit is the correctly received data unit.

In a possible implementation, when determining that at least one of the data units fails to be received, the processing unit 210 triggers generation of the first feedback information or the second feedback information. Alternatively, the processing unit 210 triggers, based on a periodicity, generation of the first feedback information or the second feedback information. Alternatively, the processing unit 210 triggers, based on a quantity of correctly received data units, generation of the first feedback information or the second feedback information.

When the communication apparatus 100 is used in the compression node, the communication apparatus 200 is used in the decompression node, and the method shown in FIG. 9 is performed, the following operations may be further performed.

In a possible implementation, the communication apparatus 100 and the communication apparatus 200 may update, by using the following method, the first compression dictionary based on the data unit that fails to be received: The processing unit 110 and the processing unit 210 update the first compression dictionary to the original compression dictionary; or the processing unit 110 and the processing unit 210 reset a part corresponding to the data unit in the first compression dictionary.

In a possible implementation, when the receiving unit 220 does not receive the data packet within a preset periodicity, the processing unit 210 triggers generation of the feedback information.

It should be understood that division into the units in the foregoing apparatuses is merely logical function division. In an actual implementation, all or some of the units may be integrated into a physical entity, or may be physically separate. In addition, all the units in the apparatuses may be implemented in a form of software invoked by a processing element, or may be implemented in a form of hardware; or some units may be implemented in a form of software invoked by a processing element, and some units may be implemented in a form of hardware. For example, each unit may be an independently disposed processing element, or may be integrated into a chip of the apparatuses for implementation. Alternatively, each unit may be stored in a memory in a form of a program to be invoked by a processing element of the apparatuses to perform a function of the unit. In addition, all or some of the units may be integrated together, or may be implemented independently. The processing element herein may also be referred to as a processor, and may be an integrated circuit having a signal processing capability. In an implementation process, the steps in the foregoing methods or the foregoing units may be implemented by using a hardware integrated logic circuit of the processor element, or may be implemented in a form of software invoked by the processing element.

In an example, a unit in any one of the foregoing apparatuses may be one or more integrated circuits configured to implement the foregoing methods, for example, one or more specific integrated circuits (application-specific integrated circuits, ASICs), one or more microprocessors (digital signal processors, DSPs), one or more field programmable gate arrays (field programmable gate arrays, FPGAs), or a combination of at least two of these types of integrated circuits. For another example, when a unit in the apparatus is implemented by a program scheduled by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SoC).

The foregoing receiving unit is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing sending unit is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

The compression node exchanges information with the decompression node by using an interface protocol.

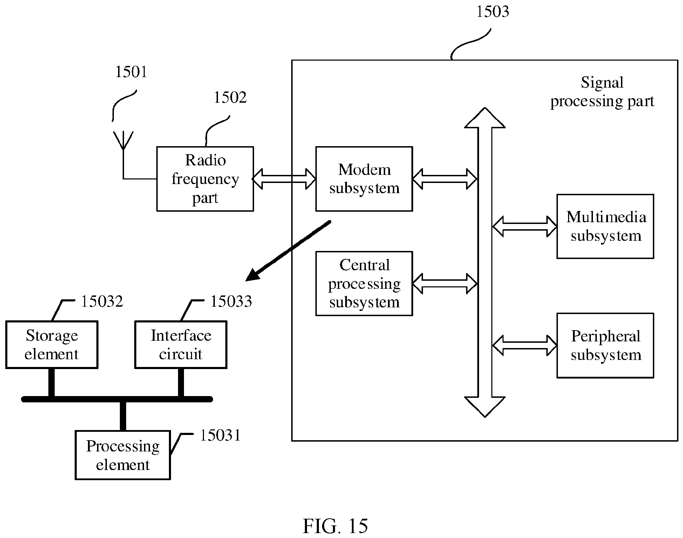

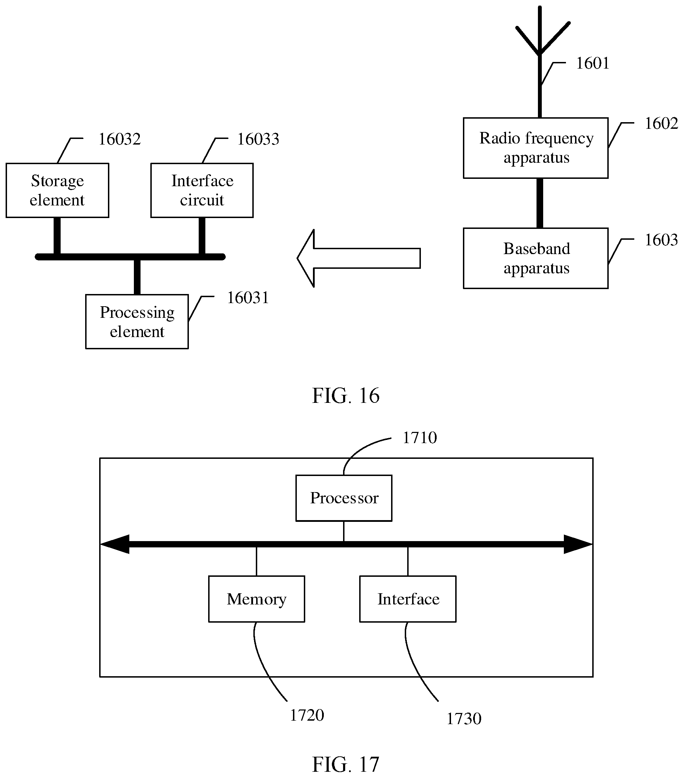

In this embodiment of this application, the compression node may be a terminal or a network device, and the decompression node may also be a terminal or a network device. When the compression node and the decompression node are terminals, FIG. 15 is a schematic diagram of structures of the compression node and the decompression node. When the compression node and the decompression node are network devices, FIG. 16 or FIG. 17 is a schematic diagram of structures of the compression node and the decompression node.

FIG. 15 is a schematic diagram of a structure of a terminal according to an embodiment of this application. The terminal may be the compression node or the decompression node in the foregoing embodiments, and is configured to implement operations of the compression node or the decompression node in the foregoing embodiments. As shown in FIG. 15, the terminal includes an antenna 1501, a radio frequency part 1502, and a signal processing part 1503. The antenna 1501 is connected to the radio frequency part 1502. In a downlink direction, the radio frequency part 1502 receives, by using the antenna 1501, information sent by a network device; and sends, to the signal processing part 1503 for processing, the information sent by the network device. In an uplink direction, the signal processing part 1503 processes information about the terminal device, and sends the information to the radio frequency part 1502. The radio frequency part 1502 processes the information about the terminal device, and then sends the processed information to the network device through the antenna 1501.

The signal processing part 1503 may include a modem subsystem, configured to process each communication protocol layer of data. The signal processing part 1503 may further include a central processing subsystem, configured to process an operating system and an application layer of the terminal. In addition, the signal processing part 1503 may further include another subsystem, for example, a multimedia subsystem or a peripheral subsystem. The multimedia subsystem is configured to control a camera, a screen display, and the like of the terminal. The peripheral subsystem is configured to implement a connection to another device. The modem subsystem may be a separately disposed chip. Optionally, the foregoing apparatus used for the terminal may be located in the modem subsystem.

The modem subsystem may include one or more processing elements 15031, for example, a main control CPU and another integrated circuit. In addition, the modem subsystem may further include a storage element 15032 and an interface circuit 15033. The storage element 15032 is configured to store data and a program. However, a program used to perform the methods performed by the terminal in the foregoing methods may not be stored in the storage element 15032, but is stored in a memory outside the modem subsystem, and is loaded and used by the modem subsystem when to be used. The interface circuit 15033 is configured to communicate with another subsystem. The foregoing apparatus used for the terminal may be located in the modem subsystem. The modem subsystem may be implemented by using a chip. The chip includes at least one processing element and an interface circuit. The processing element is configured to perform the steps of any method performed by the terminal. An interface circuit is configured to communicate with another apparatus. In an implementation, units of the terminal that implement the steps in the foregoing methods may be implemented by a processing element scheduling a program. For example, an apparatus used in the terminal includes a processing element and a storage element. The processing element invokes a program stored in the storage element, to perform the methods performed by the terminal in the foregoing method embodiments. The storage element may be a storage element located on a same chip as the processing element, that is, an on-chip storage element.

In another implementation, the program used to perform the methods performed by the terminal in the foregoing methods may be in a storage element located on a different chip from the processing element, namely, an off-chip storage element. In this case, the processing element invokes or loads the program from the off-chip storage element to the on-chip storage element, to invoke and perform the methods performed by the terminal in the foregoing method embodiments.

In still another implementation, units that implement the steps in the foregoing methods and that are in the apparatus used in the terminal may be configured as one or more processing elements. These processing elements are disposed in the modem subsystem. The processing element herein may be an integrated circuit, for example, one or more ASICs, one or more DSPs, one or more FPGAs, or a combination of these types of integrated circuits. These integrated circuits may be integrated together to form a chip.

Units of the terminal that implement the steps in the foregoing methods may be integrated together, and implemented in a form of a system-on-a-chip (system-on-a-chip, SoC). The SoC chip is configured to implement the foregoing methods. At least one processing element and storage element may be integrated into the chip, and the processing element invokes a program stored in the storage element to implement the foregoing methods performed by the terminal. Alternatively, at least one integrated circuit may be integrated into the chip, to implement the foregoing methods performed by the terminal. Alternatively, with reference to the foregoing implementations, functions of some units may be implemented by invoking a program by the processing element, and functions of some units may be implemented by the integrated circuit.

It can be learned that the foregoing apparatus used in the terminal may include at least one processing element and an interface circuit. The at least one processing element is configured to perform any method performed by the terminal provided in the foregoing method embodiments. The processing element may perform some or all steps performed by the terminal, in a first manner, to be specific, by invoking the program stored in the storage element; or may perform some or all steps performed by the terminal, in a second manner, to be specific, by using a hardware integrated logic circuit in the processor element in combination with instructions; or may certainly perform, by combining the first manner and the second manner, some or all steps performed by the terminal.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

FIG. 16 is a schematic diagram of a structure of a network device according to an embodiment of this application. The network device is configured to implement operations of the network device in the foregoing embodiments. As shown in FIG. 16, the network device includes an antenna 1601, a radio frequency apparatus 1602, and a baseband apparatus 1603. The antenna 1601 is connected to the radio frequency apparatus 1602. In an uplink direction, the radio frequency apparatus 1602 receives, by using the antenna 1601, information sent by a terminal, and sends, to the baseband apparatus 1603 for processing, the information sent by the terminal. In a downlink direction, the baseband apparatus 1603 processes the information about the terminal, and sends the information to the radio frequency apparatus 1602. The radio frequency apparatus 1602 processes the information about the terminal, and then sends the processed information to the terminal through the antenna 1601.

The baseband apparatus 1603 may include one or more processing elements 16031, for example, a main control CPU and another integrated circuit. In addition, the baseband apparatus 1603 may further include a storage element 16032 and an interface 16033. The storage element 16032 is configured to store a program and data. The interface 16033 is configured to exchange information with the radio frequency apparatus 1602. The interface is, for example, a common public radio interface (common public radio interface, CPRI). The foregoing apparatus used in the network device may be located in the baseband apparatus 1603. For example, the foregoing apparatus used in the network device may be a chip in the baseband apparatus 1603. The chip includes at least one processing element and an interface circuit. The processing element is configured to perform the steps of any method performed by the network device. The interface circuit is configured to communicate with another apparatus. In an implementation, units of the network device that implement the steps in the foregoing methods may be implemented by a processing element scheduling a program. For example, an apparatus used in the network device includes a processing element and a storage element. The processing element invokes a program stored in the storage element, to perform the methods performed by the network device in the foregoing method embodiments. The storage element may be a storage element located on a same chip as the processing element, that is, an on-chip storage element, or may be a storage element located on a different chip from the processing element, that is, an off-chip storage element.

In another implementation, units that implement the steps in the foregoing methods and that are in the apparatus used in the network device may be configured as one or more processing elements. These processing elements are disposed in the baseband apparatus. The processing element herein may be an integrated circuit, for example, one or more ASICs, one or more DSPs, one or more FPGAs, or a combination of these types of integrated circuits. These integrated circuits may be integrated together to form a chip.

Units of the network device that implement the steps in the foregoing methods may be integrated together, and implemented in a form of a system-on-a-chip (system-on-a-chip, SoC). For example, the baseband apparatus includes the SoC chip, configured to implement the foregoing methods. At least one processing element and storage element may be integrated into the chip, and the processing element invokes a program stored in the storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by invoking a program by the processing element, and functions of some units may be implemented by the integrated circuit.

It can be learned that the foregoing apparatus used in the network device may include at least one processing element and an interface circuit. The at least one processing element is configured to perform any method performed by the network device provided in the foregoing method embodiments. The processing element may perform some or all steps performed by the network device, in a first manner, to be specific, by invoking the program stored in the storage element; or may perform some or all steps performed by the network device, in a second manner, to be specific, by using a hardware integrated logic circuit in the processor element in combination with instructions; or may certainly perform, by combining the first manner and the second manner, some or all steps performed by the network device.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

FIG. 17 is a schematic diagram of a structure of another network device according to an embodiment of this application. The network device may be the network device in the foregoing embodiments and is configured to implement operations of the network device in the foregoing embodiments.

As shown in FIG. 17, the network device includes a processor 1710, a memory 1720, and an interface 1730. The processor 1710, the memory 1720, and the interface 1730 are signal-connected.

Functions of the units may be implemented by the processor 1710 by invoking a program stored in the memory 1720. That is, the foregoing apparatus includes a memory and a processor. The memory is configured to store a program, and the program is invoked by the processor to perform the methods in the foregoing method embodiments. The processor herein may be an integrated circuit having a signal processing capability, for example, a CPU. Alternatively, functions of the foregoing units may be implemented by one or more integrated circuits configured to implement the foregoing methods, for example, one or more ASICs, one or more microprocessors DSPs, one or more FPGAs, or a combination of at least two of the integrated circuits. Alternatively, the foregoing implementations may be combined.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can indicate the computer or the another programmable data processing device to work in a specific manner, so that the instructions stored in the computer-readable memory generate an artifact that includes an instruction apparatus. The instruction apparatus implements the specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Although some possible embodiments of this application have been described, a person skilled in the art can make changes and modifications to these embodiments that they fall within the scope of the invention as defined by the appended claims.

## Claims

1. A communication method, comprising:
obtaining (101a), by a compression node, a first compression dictionary;
compressing (102), by the compression node, a first data packet by using the first compression dictionary, and sending, to a decompression node, a data packet obtained by compressing the first data packet; and
compressing (105), by the compression node, a second data packet by using the first compression dictionary, and sending, to the decompression node, a data packet obtained by compressing the second data packet,
**characterized in that**
the method further comprises:
receiving (205), by the compression node, before the step of compressing, indication information from the decompression node, wherein the indication information is used to indicate the compression node not to update the first compression dictionary, so that the compression node is prohibited from updating the first compression dictionary; and
the compressing, by the compression node, a second data packet by using the first compression dictionary comprises:
compressing, by the compression node based on the indication information, the second data packet by using the first compression dictionary.

2. The method according to claim 1, wherein the obtaining, by a compression node, a first compression dictionary comprises:
obtaining, by the compression node, information about the first compression dictionary; and
determining, by the compression node, the first compression dictionary based on the information about the first compression dictionary.

3. The method according to claim 2, wherein the obtaining, by the compression node, information about the first compression dictionary comprises:
locally obtaining, by the compression node, preconfigured information about the first compression dictionary; or
receiving, by the compression node, the information about the first compression dictionary from a third-party node; and
the method further comprises:
sending, by the compression node, the information about the first compression dictionary to the decompression node.

4. The method according to claim 2, wherein the obtaining, by the compression node, information about the first compression dictionary comprises:
receiving, by the compression node, the information about the first compression dictionary from the decompression node.

5. The method according to any one of claims 1 to 4, further comprising:
sending, by the compression node, information about a second compression dictionary to the decompression node, wherein the information about the second compression dictionary is used to indicate the second compression dictionary used to subsequently compress a data packet; and
compressing, by the compression node, a third data packet by using the second compression dictionary.

6. The method according to any one of claims 1 to 4, further comprising:
receiving, by the compression node, information about a second compression dictionary from the decompression node, wherein the information about the second compression dictionary is used to indicate the second compression dictionary used to subsequently compress a data packet; and
compressing, by the compression node, a third data packet by using the second compression dictionary.

7. A communication method, comprising:
obtaining (101b), by a decompression node, a first compression dictionary;
receiving (103), by the decompression node, a first data packet from a compression node, wherein the first data packet is a compressed data packet;
decompressing (104), by the decompression node, the first data packet by using the first compression dictionary;
receiving (106), by the decompression node, a second data packet from the compression node, wherein the second data packet is a compressed data packet; and
decompressing (107), by the decompression node, the second data packet by using the first compression dictionary, **characterized in that** the method further comprises:
sending (205), by the decompression node, indication information to the compression node, wherein the indication information is used to indicate the compression node not to update the compression dictionary, so that the compression node is prohibited from updating the first compression dictionary.

8. The method according to claim 7, wherein the obtaining, by a decompression node, a first compression dictionary comprises:
obtaining, by the decompression node, information about the first compression dictionary; and
determining, by the decompression node, the first compression dictionary based on the information about the first compression dictionary.

9. The method according to claim 8, wherein the obtaining, by the decompression node, information about the first compression dictionary comprises:
locally obtaining, by the decompression node, preconfigured information about the first compression dictionary; or
receiving, by the decompression node, the information about the first compression dictionary from a third-party node; and
the method further comprises:
sending, by the decompression node, the information about the first compression dictionary to the compression node.

10. The method according to claim 8, wherein the obtaining, by the decompression node, information about the first compression dictionary comprises:
receiving, by the decompression node, the information about the first compression dictionary from the compression node.

11. The method according to any one of claims 7 to 10, further comprising:
receiving, by the decompression node, information about a second compression dictionary from the compression node, wherein the information about the second compression dictionary is used to indicate the second compression dictionary used by the compression node to subsequently compress a data packet;
receiving, by the decompression node, a third data packet from the compression node, wherein the third data packet is a data packet compressed by the compression node by using the second compression dictionary; and
decompressing, by the decompression node, the third data packet by using the second compression dictionary.

12. A communication apparatus (100; 200), comprising a processor (1710), wherein the processor (1710) is configured to: be connected to a memory (1720), and read and execute a program stored in the memory (1720), to implement the method according to any one of claims 1 to 11.

13. A computer-readable storage medium, comprising a program, wherein when the program is run by a processor (1710), the method according to any one of claims 1 to 11 is performed.

## Patentansprüche

1. Kommunikationsverfahren, umfassend:
Erhalten (101a) eines ersten Kompressionswörterbuchs durch einen Kompressionsknoten,
Komprimieren (102) eines ersten Datenpakets durch den Kompressionsknoten durch Verwenden des ersten Kompressionswörterbuchs und Senden eines durch Komprimieren des ersten Datenpakets erhaltenen Datenpakets an einen Dekompressionsknoten, und
Komprimieren (105) eines zweiten Datenpakets durch den Kompressionsknoten durch Verwenden des ersten Kompressionswörterbuchs und Senden eines durch Komprimieren des zweiten Datenpakets erhaltenen Datenpakets an den Dekompressionsknoten,
**dadurch gekennzeichnet, dass**
das Verfahren ferner umfasst:
Empfangen (205) von Anzeigeinformationen vom Dekompressionsknoten durch den Kompressionsknoten vor dem Schritt des Komprimierens, wobei die Anzeigeinformationen verwendet werden, um dem Kompressionsknoten anzuzeigen, dass er das erste Kompressionswörterbuch nicht aktualisieren soll, sodass es dem Kompressionsknoten untersagt ist, das erste Kompressionswörterbuch zu aktualisieren; und
das Komprimieren eines zweiten Datenpakets durch den Kompressionsknoten durch Verwenden des ersten Kompressionswörterbuchs umfasst:
Komprimieren des zweiten Datenpakets durch den Kompressionsknoten basierend auf den Anzeigeinformationen durch Verwenden des ersten Kompressionswörterbuchs.

2. Verfahren nach Anspruch 1, wobei das Erhalten eines ersten Kompressionswörterbuchs durch einen Kompressionsknoten umfasst:
Erhalten von Informationen über das erste Kompressionswörterbuch durch den Kompressionsknoten, und
Bestimmen des ersten Kompressionswörterbuchs durch den Kompressionsknoten basierend auf den Informationen über das erste Kompressionswörterbuch.

3. Verfahren nach Anspruch 2, wobei das Erhalten von Informationen über das erste Kompressionswörterbuch durch den Kompressionsknoten umfasst:
lokales Erhalten von vorkonfigurierten Informationen über das erste Kompressionswörterbuch durch den Kompressionsknoten, oder
Empfangen der Informationen über das erste Kompressionswörterbuch durch den Kompressionsknoten von einem Drittknoten; und
das Verfahren ferner umfasst:
Senden der Informationen über das erste Kompressionswörterbuch durch den Kompressionsknoten an den Dekompressionsknoten.

4. Verfahren nach Anspruch 2, wobei das Erhalten von Informationen über das erste Kompressionswörterbuch durch den Kompressionsknoten umfasst:
Empfangen der Informationen über das erste Kompressionswörterbuch durch den Kompressionsknoten vom Dekompressionsknoten.

5. Verfahren nach einem der Ansprüche 1 bis 4, ferner umfassend:
Senden von Informationen über ein zweites Kompressionswörterbuch durch den Kompressionsknoten an den Dekompressionsknoten, wobei die Informationen über das zweite Kompressionswörterbuch verwendet werden, um das zweite Kompressionswörterbuch anzuzeigen, das zum anschließenden Komprimieren eines Datenpakets verwendet wird; und
Komprimieren eines dritten Datenpakets durch den Kompressionsknoten durch Verwenden des zweiten Kompressionswörterbuchs.

6. Verfahren nach einem der Ansprüche 1 bis 4, ferner umfassend:
Empfangen von Informationen über ein zweites Kompressionswörterbuch durch den Kompressionsknoten vom Dekompressionsknoten, wobei die Informationen über das zweite Kompressionswörterbuch verwendet werden, um das zweite Kompressionswörterbuch anzuzeigen, das zum anschließenden Komprimieren eines Datenpakets verwendet wird; und
Komprimieren eines dritten Datenpakets durch den Kompressionsknoten durch Verwenden des zweiten Kompressionswörterbuchs.

7. Kommunikationsverfahren, umfassend:
Erhalten (101b) eines ersten Kompressionswörterbuchs durch einen Dekompressionsknoten,
Empfangen (103) eines ersten Datenpakets durch den Dekompressionsknoten von einem Kompressionsknoten, wobei das erste Datenpaket ein komprimiertes Datenpaket ist;
Dekomprimieren (104) des ersten Datenpakets durch den Dekompressionsknoten durch Verwenden des ersten Kompressionswörterbuchs;
Empfangen (106) eines zweiten Datenpakets durch den Dekompressionsknoten vom Kompressionsknoten, wobei das zweite Datenpaket ein komprimiertes Datenpaket ist; und
Dekomprimieren (107) des zweiten Datenpakets durch den Dekompressionsknoten durch Verwenden des ersten Kompressionswörterbuchs, **dadurch gekennzeichnet, dass** das Verfahren ferner umfasst:
Senden (205) von Anzeigeinformationen durch den Dekompressionsknoten an den Kompressionsknoten, wobei die Anzeigeinformationen verwendet werden, um dem Kompressionsknoten anzuzeigen, dass er das Kompressionswörterbuch nicht aktualisieren soll, sodass es dem Kompressionsknoten untersagt ist, das erste Kompressionswörterbuch zu aktualisieren.

8. Verfahren nach Anspruch 7, wobei das Erhalten eines ersten Kompressionswörterbuchs durch einen Dekompressionsknoten umfasst:
Erhalten von Informationen über das erste Kompressionswörterbuch durch den Dekompressionsknoten, und
Bestimmen des ersten Kompressionswörterbuchs durch den Dekompressionsknoten basierend auf den Informationen über das erste Kompressionswörterbuch.

9. Verfahren nach Anspruch 8, wobei das Erhalten von Informationen über das erste Kompressionswörterbuch durch den Dekompressionsknoten umfasst:
lokales Erhalten von vorkonfigurierten Informationen über das erste Kompressionswörterbuch durch den Dekompressionsknoten oder
Empfangen der Informationen über das erste Kompressionswörterbuch durch den Dekompressionsknoten von einem Drittknoten; und
das Verfahren ferner umfasst:
Senden der Informationen über das erste Kompressionswörterbuch durch den Dekompressionsknoten an den Kompressionsknoten.

10. Verfahren nach Anspruch 8, wobei das Erhalten von Informationen über das erste Kompressionswörterbuch durch den Dekompressionsknoten umfasst:
Empfangen der Informationen über das erste Kompressionswörterbuch durch den Dekompressionsknoten vom Kompressionsknoten.

11. Verfahren nach einem der Ansprüche 7 bis 10, ferner umfassend:
Empfangen von Informationen über ein zweites Kompressionswörterbuch durch den Dekompressionsknoten vom Kompressionsknoten, wobei die Informationen über das zweite Kompressionswörterbuch verwendet werden, um das zweite Kompressionswörterbuch anzuzeigen, das vom Kompressionsknoten zum anschließenden Komprimieren eines Datenpakets verwendet wird;
Empfangen eines dritten Datenpakets durch den Dekompressionsknoten vom Kompressionsknoten, wobei das dritte Datenpaket ein Datenpaket ist, das vom Kompressionsknoten durch Verwenden des zweiten Kompressionswörterbuchs komprimiert wurde; und
Dekomprimieren des dritten Datenpakets durch den Dekompressionsknoten durch Verwenden des zweiten Kompressionswörterbuchs.

12. Kommunikationsvorrichtung (100; 200), umfassend einen Prozessor (1710), wobei der Prozessor (1710) konfiguriert ist zum: Verbundenwerden mit einem Speicher (1720) und Auslesen und Ausführen eines im Speicher (1720) gespeicherten Programms, um das Verfahren nach einem der Ansprüche 1 bis 11 zu implementieren.

13. Computerlesbares Speichermedium, umfassend ein Programm, wobei bei Ausführung des Programms durch einen Prozessor (1710) das Verfahren nach einem der Ansprüche 1 bis 11 durchgeführt wird.

## Revendications

1. Procédé de communication, comprenant :
l'obtention (101a), par un noeud de compression, d'un premier dictionnaire de compression ;
la compression (102), par le noeud de compression, d'un premier paquet de données à l'aide du premier dictionnaire de compression, et l'envoi, à un noeud de décompression, d'un paquet de données obtenu en compressant le premier paquet de données ; et
la compression (105), par le noeud de compression, d'un deuxième paquet de données à l'aide du premier dictionnaire de compression, et l'envoi, au noeud de décompression, d'un paquet de données obtenu en compressant le deuxième paquet de données,
**caractérisé en ce que** le procédé comprend en outre :
la réception (205), par le noeud de compression, avant l'étape de compression, d'informations d'indication à partir du noeud de décompression, dans lequel les informations d'indication servent à indiquer au noeud de compression de ne pas mettre à jour le premier dictionnaire de compression, de telle sorte que le noeud de compression soit empêché de mettre à jour le premier dictionnaire de compression ; et la compression, par le noeud de compression, d'un deuxième paquet de données à l'aide du premier dictionnaire de compression comprend :
la compression, par le noeud de compression en fonction des informations d'indication, du deuxième paquet de données à l'aide du premier dictionnaire de compression.

2. Procédé selon la revendication 1, dans lequel l'obtention, par un noeud de compression, d'un premier dictionnaire de compression comprend :
l'obtention, par le noeud de compression, d'informations relatives au premier dictionnaire de compression ; et
la détermination, par le noeud de compression, du premier dictionnaire de compression en fonction des informations relatives au premier dictionnaire de compression.

3. Procédé selon la revendication 2, l'obtention, par le noeud de compression, d'informations relatives au premier dictionnaire de compression comprenant :
l'obtention localement, par le noeud de compression, d'informations préconfigurées relatives au premier dictionnaire de compression ; ou
la réception, par le noeud de compression, des informations relatives au premier dictionnaire de compression à partir d'un noeud tiers ; et
le procédé comprenant en outre :
l'envoi, par le noeud de compression, des informations relatives au premier dictionnaire de compression au noeud de décompression.

4. Procédé selon la revendication 2, dans lequel l'obtention, par le noeud de compression, d'informations relatives au premier dictionnaire de compression comprend :
la réception, par le noeud de compression, des informations relatives au premier dictionnaire de compression à partir du noeud de décompression.

5. Procédé selon l'une quelconque des revendications 1 à 4, comprenant en outre :
l'envoi, par le noeud de compression, d'informations relatives à un second dictionnaire de compression au noeud de décompression, dans lequel les informations relatives au second dictionnaire de compression servent à indiquer le second dictionnaire de compression utilisé pour compresser ultérieurement un paquet de données ; et
la compression, par le noeud de compression, d'un troisième paquet de données à l'aide du second dictionnaire de compression.

6. Procédé selon l'une quelconque des revendications 1 à 4, comprenant en outre :
la réception, par le noeud de compression, d'informations relatives à un second dictionnaire de compression à partir du noeud de décompression, dans lequel les informations relatives au second dictionnaire de compression servent à indiquer le second dictionnaire de compression utilisé pour compresser ultérieurement un paquet de données ; et
la compression, par le noeud de compression, d'un troisième paquet de données à l'aide du second dictionnaire de compression.

7. Procédé de communication, comprenant :
l'obtention (101b), par un noeud de décompression, d'un premier dictionnaire de compression ;
la réception (103), par le noeud de décompression, d'un premier paquet de données à partir d'un noeud de compression, dans lequel le premier paquet de données est un paquet de données compressé ;
la décompression (104), par le noeud de décompression, du premier paquet de données à l'aide du premier dictionnaire de compression ;
la réception (106), par le noeud de décompression, d'un deuxième paquet de données à partir du noeud de compression, le deuxième paquet de données étant un paquet de données compressé ; et
la décompression (107), par le noeud de décompression, du deuxième paquet de données à l'aide du premier dictionnaire de compression,
**caractérisé en ce que** le procédé comprend en outre :
l'envoi (205), par le noeud de décompression, d'informations d'indication au noeud de compression, dans lequel les informations d'indication servent à indiquer au noeud de compression de ne pas mettre à jour le dictionnaire de compression, de telle sorte que le noeud de compression soit empêché de mettre à jour le premier dictionnaire de compression.

8. Procédé selon la revendication 7, dans lequel l'obtention, par un noeud de décompression, d'un premier dictionnaire de compression comprend :
l'obtention, par le noeud de décompression, d'informations relatives au premier dictionnaire de compression ; et
la détermination, par le noeud de décompression, du premier dictionnaire de compression en fonction des informations relatives au premier dictionnaire de compression.

9. Procédé selon la revendication 8, l'obtention, par le noeud de décompression, d'informations relatives au premier dictionnaire de compression comprenant :
l'obtention localement, par le noeud de décompression, d'informations préconfigurées relatives au premier dictionnaire de compression ; ou
la réception, par le noeud de décompression, des informations relatives au premier dictionnaire de compression à partir d'un noeud tiers ; et
le procédé comprenant en outre :
l'envoi, par le noeud de décompression, des informations relatives au premier dictionnaire de compression au noeud de compression.

10. Procédé selon la revendication 8, dans lequel l'obtention, par le noeud de décompression, d'informations relatives au premier dictionnaire de compression comprend :
la réception, par le noeud de décompression, des informations relatives au premier dictionnaire de compression à partir du noeud de compression.

11. Procédé selon l'une quelconque des revendications 7 à 10, comprenant en outre :
la réception, par le noeud de décompression, d'informations relatives à un second dictionnaire de compression à partir du noeud de compression, dans lequel les informations relatives au second dictionnaire de compression servent à indiquer le second dictionnaire de compression utilisé par le noeud de compression pour compresser ultérieurement un paquet de données ;
la réception, par le noeud de décompression, d'un troisième paquet de données à partir du noeud de compression, le troisième paquet de données étant un paquet de données compressé par le noeud de compression à l'aide du second dictionnaire de compression ; et
la décompression, par le noeud de décompression, du troisième paquet de données à l'aide du second dictionnaire de compression.

12. Appareil de communication (100 ; 200), comprenant un processeur (1710), dans lequel le processeur (1710) est configuré pour : être connecté à une mémoire (1720), et lire et exécuter un programme stocké dans la mémoire (1720), afin d'implémenter le procédé selon l'une quelconque des revendications 1 à 11.

13. Support de stockage lisible par ordinateur, comprenant un programme, dans lequel, lorsque le programme est exécuté par un processeur (1710), le procédé selon l'une quelconque des revendications 1 à 11 est réalisé.
